# EUROPÄISCHE PATENTANMELDUNG

(11) **EP 4 269 335 A1**
(43) Veröffentlichungstag der Anmeldung: **01.11.2023**
(21) Anmeldenummer: 23167884.8
(22) Anmeldetag: 14.04.2023
(51) Int. Cl.: C01B 13/02, A62B 21/00

(54) **ZUSAMMENSETZUNG ZUR ERZEUGUNG VON SAUERSTOFF**

(30) Priorität: 27.04.2022 DE 102022110174
(71) Anmelder: Diehl Aviation Gilching GmbH, 82205 Gilching (DE)
(72) Erfinder: Kallfaß, Christoph, 74523 Schwäbisch Hall (DE); Fritze, Lars, 97074 Würzburg (DE); Sprenger, Jan A. P., 97199 Ochsenfurt (DE); Finze, Maik, 97295 Waldbrunn (DE)
(74) Vertreter: Diehl Patentabteilung

(57) **Zusammenfassung**

Die Erfindung betrifft eine Zusammensetzung zur Erzeugung von Sauerstoff, umfassend die folgenden Bestandteile oder bestehend aus den folgenden Bestandteilen:
- Eine Sauerstoffquelle, wobei die Sauerstoffquelle Kaliumsuperoxid ist,
und
- eine ionische Flüssigkeit, wobei die ionische Flüssigkeit ein aus mindestens einem Kation und höchstens 100 Kationen und mindestens einem Anion und höchstens 100 Anionen bestehendes Salz ist,
- wobei die Zusammensetzung zusätzlich eine Wasser enthaltende Lösung oder eine Wasser enthaltende Mischung umfasst, wobei die Wasser enthaltende Lösung eine solche Menge eines weiteren Salzes oder eine solche Menge eines weiteren Salzes zusammen mit einer solchen Menge eines Gefrierschutzmittels oder die Wasser enthaltende Mischung eine solche Menge eines Gefrierschutzmittels enthält, dass der Gefrierpunkt der Lösung oder der Mischung gegenüber dem Gefrierpunkt des Wassers um mindestens 10 °C herabgesetzt ist.

## Beschreibung

Die vorliegende Erfindung betrifft eine Zusammensetzung zur Erzeugung von, insbesondere atembarem, Sauerstoff, einen Sauerstoffgenerator, ein Verfahren zur Erzeugung von, insbesondere atembarem, Sauerstoff und eine Verwendung der Zusammensetzung. Die Zusammensetzung umfasst eine Sauerstoffquelle und eine ionische Flüssigkeit.

Der Mensch kann ohne Sauerstoff nicht existieren. In vielen Umgebungen ist die Sauerstoffversorgung jedoch unzureichend oder es besteht die Gefahr von Notfallsituationen mit Sauerstoffmangel. Um atembaren Sauerstoff zu erzeugen, können verschiedene Arten chemischer Sauerstoffgeneratoren eingesetzt werden. Ein Typ eines solchen chemischen Sauerstoffgenerators verwendet Peroxide als Sauerstoffquelle, zum Beispiel Natriumpercarbonat, Natriumperborat oder ein Harnstoffaddukt von Wasserstoffperoxid. Die Zersetzung der Peroxide ergibt Sauerstoff, und die Zersetzungsreaktion kann durch Inkontaktbringen der Peroxidverbindungen mit einem geeigneten Enzym oder Übergangsmetallkatalysator gestartet werden. Chemische Sauerstoffgeneratoren dieser Art sind in US 2 035 896 A, WO 86/02063 A1, JP S61227903 A und DE 196 02 149 A1 offenbart.

Aus der EP 3 323 782 A1 sind ionische Flüssigkeiten bekannt, die als Lösungsmittel in einer sauerstofferzeugenden Zusammensetzung verwendet werden. Die Zusammensetzung umfasst mindestens eine Sauerstoffquelle, mindestens eine ionische Flüssigkeit und mindestens eine Metalloxidverbindung, wobei die Sauerstoffquelle eine Peroxidverbindung umfasst und die ionische Flüssigkeit zumindest in einem Temperaturbereich von -10°C bis +50°C im flüssigen Zustand vorliegt. Die Metalloxidverbindung ist ein Oxid eines einzelnen Metalls oder von zwei oder mehr verschiedenen Metallen, wobei das/die Metall(e) aus den Metallen der Gruppen 2 bis 14 des Periodensystems der Elemente ausgewählt ist/sind.

EP 3 323 470 A1 offenbart eine Vorrichtung zur Erzeugung von Sauerstoff mit mindestens einer Reaktionskammer zur Aufnahme einer Zusammensetzung zur Erzeugung von Sauerstoff. Diese Zusammensetzung umfasst eine Peroxidverbindung als Sauerstoffquelle und eine Formulierung einer ionischen Flüssigkeit, die eine ionische Flüssigkeit mit einem Kation und einem Metallatanion umfasst. Des Weiteren umfasst die Vorrichtung Mittel zum physikalischen Trennen und Mittel zum Herstellen des physikalischen Kontakts der Sauerstoffquelle und der Formulierung der ionischen Flüssigkeit sowie Mittel, die den Austritt von Sauerstoff aus der Reaktionskammer ermöglichen.

Aus der EP 3 604 212 B1 ist ein Sauerstoffgenerator bekannt, der eine Zusammensetzung zur Erzeugung von Sauerstoff und mindestens einen Tuner-Kompaktkörper mit einer Kern-Hülle-Struktur umfasst. Der Tuner-Kompaktkörper umfasst eine Verbindung, die aus einem Peroxid-Zersetzungskatalysator, einer sauren Verbindung oder einer basischen Verbindung ausgewählt ist. Die Zusammensetzung zur Erzeugung von Sauerstoff umfasst ein Peroxid als Sauerstoffquelle, eine ionische Flüssigkeit, eine Metalloxidverbindung und/oder ein Metallsalz als Zersetzungskatalysator und, wenn die ionische Flüssigkeit eine saure Flüssigkeit ist, eine basische Verbindung. Weiterhin ist aus der EP 3 604 212 B1 ein Verfahren zum Einstellen der Sauerstoffproduktionsrate der Zusammensetzung zur Erzeugung von Sauerstoff bekannt.

Die WO 2006/001607 A1 offenbart sauerstofferzeugende Zusammensetzungen, die Kaliumsuperoxid oder Natriumperoxid, ein Material zur Stabilisierung der Reaktivität und des Oxidationsvermögens von Kaliumsuperoxid oder Natriumperoxid und gegebenenfalls mindestens einen Katalysator, ausgewählt aus einem Oxidationskatalysator für Kohlenmonoxid, einem Material zur Verbesserung der Formbarkeit und Verarbeitbarkeit der Zusammensetzung und einem Material zur Erhöhung der anfänglichen Kohlendioxidabsorptionsrate umfassen. Das Material zur Stabilisierung der Reaktivität und der Oxidationskraft von Kaliumsuperoxid oder Natriumperoxid wird ausgewählt aus Calciumhydroxid, Aluminiumhydroxid, Magnesiumhydroxid, Bariumhydroxid, Calciumcarbonat, Talkum und Ton. Der Katalysator für die Oxidation von Kohlenmonoxid ist ausgewählt aus Kupferoxid, Manganoxid und einer Mischung davon (Hopcalit). Das Material zur Verbesserung der Formbarkeit und Verarbeitbarkeit der sauerstofferzeugenden Zusammensetzungen wird ausgewählt aus Glaspulver, Glasfaser, Keramikfaser, Stahlwolle, Bentonit, Kaolinit, Natriumsilikat und Kaliumsilikat.

Die US 4 490 274 offenbart eine chemische Zusammensetzung, umfassend sauerstoffhaltige Bestandteile und Aktivatoren, die, wenn sie aktiviert werden, Sauerstoff zur Verwendung in Atemgemischen erzeugen, wobei die sauerstoffhaltigen Bestandteile Kaliumsuperoxid und Natriumperoxid sind und die Aktivatoren Aluminiumhydroxid, Mangandioxid und pulverisiertes Aluminium sind. Das Verhältnis der chemischen Zusammensetzung entspricht 10-20 Gew.-% Natriumperoxid, 15-25 Gew.-% Aluminiumhydroxid, 5-7 Gew.-% Manganoxid, 2,5-3,5 Gew.-% Aluminiumpulver. Der Rest des Verhältnisses der chemischen Zusammensetzung entspricht Kaliumsuperoxid.

Aus der US 2017/0263989 A1 ist eine elektrochemische Lithium-Luft-Zelle bekannt. Die Batterie umfasst einen Anodenraum, einen Kathodenraum und eine Lithiumionen-leitende Membran, die den Anodenraum vom Kathodenraum trennt. Die Anodenkammer umfasst eine Anode mit Lithium, eine Lithiumlegierung oder ein poröses Material, das Lithium adsorbieren und freisetzen kann, und einen Lithiumionenelektrolyten, während die Kathodenkammer eine Luftelektrode, eine ionische Flüssigkeit, die die Reduktion von Sauerstoff unterstützen kann, und eine gelöste Konzentration von Kaliumsuperoxid umfasst. Die Lithiumionenkonzentration im Kathodenraum ist im Vergleich zur Kaliumionenkonzentration gering.

Die US 2019/0016597 A1 offenbart ein Verfahren zur Sauerstofferzeugung in einer ionischen Flüssigkeit mittels einer Sauerstoffquelle und einem Metallsalz als Katalysator. Als Sauerstoffquellen sind Alkalimetallpercarbonate, Alkalimetallperborate, Harnstoff-Wasserstoffperoxid und Mischungen daraus angegeben. Das Verfahren ermöglicht die Erzeugung von Sauerstoff in Abwesenheit von Wasser bei relativ niedriger Temperatur.

US 4,963,327 offenbart eine Vorrichtung und ein Verfahren zum selektiven Absorbieren unerwünschter organischer und anorganischer Dämpfe und Gase aus der Umgebungsluft bei gleichzeitiger Erhöhung des Sauerstoffgehalts der behandelten Luft. Zur Absorption von Kohlendioxid dient dabei ein in fester Form vorliegender Kohlendioxidabsorber, bei dem es sich um Lithiumhydroxid handeln kann. Als Beispiele einer Sauerstoff erzeugenden Verbindung werden Alkalimetall- und Erdalkalimetallperoxide, Superoxide, Trioxide, Percarbonate, Permanganaten und Mischungen davon genannt. Bei langsamer Atmung reicht die Reaktion dieser Verbindungen mit der Feuchtigkeit aus der Atemluft zur Sauerstofffreisetzung. Bei schneller Atmung, wird der Sauerstoff erzeugenden Verbindung eine wässrige Lösung von MgCl₂ mit einer geringen Menge an Tensid aus einem angeschlossenen Reservoir zugeführt. Das MgCl₂ dient dabei als Frostschutzmittel und als Zersetzungsmittel für die alkalischen Salze aus der Sauerstoff erzeugenden Verbindung/Wasser/Kohlendioxid-Reaktion. Ein unlösliches Gel aus Magnesiumhydroxid/-carbonat wird zusammen mit pH-neutralem Salz gebildet. Anstelle von MgCl₂ können andere Salze verwendet werden, die in wässrigen Lösungen eine Gefrierpunkterniedrigungen bewirken, wenn sie bei Reaktion mit Alkalihydroxiden und/oder -carbonaten im Wesentlichen unlösliche Verbindungen bilden. Beispiele sind CaCl₂, FeCl₃ und ZnCl₂.

Die Aufgabe, die durch die vorliegende Erfindung zu lösen ist, besteht darin, eine alternative Zusammensetzung zur Erzeugung von Sauerstoff und einen alternativen Sauerstoffgenerator bereitzustellen. Weiterhin sollen ein Verfahren und eine Verwendung zur Erzeugung von Sauerstoff angegeben werden.

Die Aufgabe wird durch die Merkmale der Patentansprüche 1, 11, 13 und 15 gelöst. Ausgestaltungen der Erfindung ergeben sich aus den Merkmalen der Patentansprüche 2 bis 10, 12 und 14.

Die Erfindung betrifft eine Zusammensetzung zur Erzeugung von Sauerstoff, wobei die Zusammensetzung die folgenden Bestandteile umfasst oder daraus besteht: Eine Sauerstoffquelle, wobei die Sauerstoffquelle Kaliumsuperoxid ist, eine ionische Flüssigkeit, welche eine aus mindestens einem Kation und höchstens 100 Kationen und mindestens einem Anion und höchstens 100 Anionen bestehendes Salz ist, und eine Wasser enthaltende Lösung oder eine Wasser enthaltende Mischung, wobei die Wasser enthaltende Lösung eine solche Menge eines weiteren Salzes oder eine solche Menge eines weiteren Salzes zusammen mit einer solchen Menge eines Gefrierschutzmittels oder die Wasser enthaltende Mischung eine solche Menge eines Gefrierschutzmittels enthält, dass der Gefrierpunkt der Lösung oder der Mischung gegenüber dem Gefrierpunkt des Wassers um mindestens 10 °C herabgesetzt ist. Das weitere Salz der Wasser enthaltenden Lösung ist dabei ein Alkalimetallhydroxid, ein Alkalimetallhydroxid-Hydrat, ein Alkalimetallchlorid, ein Alkalimetallchlorid-Hydrat, ein Hydroxid mit einem organischen Kation, ein Hydrat eines Hydroxids mit einem organischen Kation oder ein Gemisch von mindestens zwei ausgewählt aus einem Alkalimetallhydroxid, einem Alkalimetallhydroxid-Hydrat, einem Alkalimetallchlorid, einem Alkalimetallchlorid-Hydrat, einem Hydroxid mit einem organischen Kation und einem Hydrat eines Hydroxids mit einem organischen Kation. Das Gefrierschutzmittel umfasst einen Alkohol oder besteht aus einem Alkohol.

Es kann sich bei dem weiteren Salz um ein als Feststoff vorliegendes Salz handeln. Die ionische Flüssigkeit kann ein aus höchstens 80 Kationen, insbesondere höchstens 60 Kationen, insbesondere höchstens 40 Kationen, insbesondere höchstens 20 Kationen, insbesondere höchstens zehn Kationen, insbesondere höchstens neun Kationen, insbesondere höchstens acht Kationen, insbesondere höchstens sieben Kationen, insbesondere höchstens sechs Kationen, insbesondere höchstens fünf Kationen, insbesondere höchstens vier Kationen, insbesondere höchstens drei Kationen, insbesondere höchstens zwei Kationen, und ein aus höchstens 80 Anionen, insbesondere höchstens 60 Anionen, insbesondere höchstens 40 Anionen, insbesondere höchstens 20 Anionen, insbesondere höchstens zehn Anionen, insbesondere höchstens neun Anionen, insbesondere höchstens acht Anionen, insbesondere höchstens sieben Anionen, insbesondere höchstens sechs Anionen, insbesondere höchstens fünf Anionen, insbesondere höchstens vier Anionen, insbesondere höchstens drei Anionen, insbesondere höchstens zwei Anionen, bestehendes Salz sein. Insbesondere kann die ionische Flüssigkeit ein aus einem oder zwei Kationen und einem oder zwei Anionen bestehendes Salz sein. In einer Ausgestaltung weist die ionische Flüssigkeit nur ein Kation und/oder nur ein Anion auf. Die ionische Flüssigkeit weist einen Schmelzpunkt von weniger als 100 °C auf. Es kann sich dabei um eine ionische Flüssigkeit handeln, die bei 85 °C, insbesondere bei 50 °C, insbesondere bei 0 °C, insbesondere bei -50 °C, flüssig ist. Hierbei und im Folgenden ist unter dem Begriff "Kation" eine Vielzahl von Kationen derselben Art und unter dem Begriff "Anion" eine Vielzahl von Anionen derselben Art zu verstehen. Zum Beispiel bedeutet das Merkmal "aus mindestens einem Kation und höchstens zehn Kationen und mindestens einem Anion und höchstens zehn Anionen bestehendes Salz", dass das Salz aus einer Vielzahl von Kationen von mindestens einer Art und höchstens zehn Arten und aus einer Vielzahl von Anionen von mindestens einer Art und höchstens zehn Arten besteht.

Die Wasser enthaltende Lösung kann im einfachsten Fall nur aus Wasser und dem weiteren Salz oder aus Wasser, dem weiteren Salz und dem Gefrierschutzmittel bestehen. Die Wasser enthaltende Mischung kann im einfachsten Fall nur aus Wasser und dem Gefrierschutzmittel bestehen.

Die erfindungsgemäße Zusammensetzung benötigt zur Erzeugung von Sauerstoff keine Peroxidverbindung als Sauerstoffquelle und keine Metalloxidverbindung, insbesondere keine Metalloxidverbindung als Katalysator und keinen Oxidationskatalysator für Kohlenmonoxid. In einer Ausgestaltung umfasst die erfindungsgemäße Zusammensetzung auch keine der genannten Verbindungen und keinen Oxidationskatalysator für Kohlenmonoxid. Die erfindungsgemäße Zusammensetzung unterscheidet sich stark von den aus den EP 3 323 782 A1, EP 3 323 470 A1, EP 3 604 212 B1, WO 2006/001607 A1 und US 4 490 274 bekannten Zusammensetzungen zur Erzeugung von Sauerstoff.

Im Gegensatz zu der aus der US 2017/0263989 A1 bekannten nicht-wässrigen Zusammensetzung in der elektrochemischen Lithium-Luft-Zelle, umfasst die erfindungsgemäße Zusammensetzung zur Erzeugung von Sauerstoff eine Wasser enthaltende Lösung oder eine Wasser enthaltende Mischung. Enthielte die Zusammensetzung in der Lithium-Luft-Zelle Wasser, würde sie Sauerstoff bilden und die Lithium-Luft-Zelle zerstören.

Im Gegensatz zu dem aus der US 2019/0016597 A1 bekannten Verfahren ist bei der erfindungsgemäßen Zusammensetzung und beim erfindungsgemäßen Verfahren die Anwesenheit von Wasser in der Wasser enthaltenden Lösung oder Wasser enthaltenden Mischung essentiell für die Freisetzung des Sauerstoffs. Bei dem aus der US 2019/0016597 A1 bekannten Verfahren wird die Aufgabe der Erzeugung von Sauerstoff bei niedrigen Temperaturen in alternativer Weise durch die Vermeidung von Wasser gelöst.

Im Gegensatz zu der aus der US 4,963,327 bekannten Vorrichtung enthält die erfindungsgemäße Zusammensetzung kein Salz, das bei Reaktion mit Alkalihydroxiden und/oder - carbonaten im Wesentlichen unlösliche Verbindungen bildet. Bei der erfindungsgemäßen Zusammensetzung und dem damit durchgeführten erfindungsgemäßen Verfahren würde die massive Bildung unlöslicher Reaktionsprodukte zu einem verminderten Kontakt des Kaliumsuperoxids mit Wasser und damit zu einer verminderten Erzeugung von Sauerstoff führen.

Das erfindungsgemäße Verfahren gewährleistet eine auch bei sehr niedrigen Temperaturen skalierbare Erzeugung von Sauerstoff durch die erfindungsgemäße Zusammensetzung. Gleichzeitig erfolgt die Erzeugung von Sauerstoff durch die erfindungsgemäße Zusammensetzung kontinuierlich und gleichmäßig und in einem relativ großen Temperaturbereich, insbesondere in einem Temperaturbereich von -40 °C bis +70 °C. Die kontinuierliche und gleichmäßige Erzeugung von Sauerstoff kann dabei über einen verhältnismäßig langen Zeitraum gewährleistet werden.

Bei dem Sauerstoff kann es sich um atembaren Sauerstoff handeln, insbesondere für den Einsatz im Notfall. In diesem Fall wäre eine Zusammensetzung, aus der Sauerstoff nur in Spuren oder als Gemisch mit einem anderen nicht atembaren Gas, wie z.B. Kohlenstoffmonoxid, Ammoniak, Chlor oder einer Chlorverbindung oder mehreren Chlorverbindungen, erzeugt werden kann, keine Zusammensetzung zur Erzeugung von atembarem Sauerstoff.

Die Sauerstoffquelle ist Kaliumsuperoxid. Diese Sauerstoffquelle liegt bei Raumtemperatur und in einem für einen Notfallsauerstoffgenerator in Frage kommenden Temperaturbereich stets als Feststoff vor.

Bei der ionischen Flüssigkeit handelt es sich nicht um eine Lösung eines Salzes in einem Lösungsmittel, wie z. B. Wasser, sondern um ein Salz, welches einen Schmelzpunkt von unter 100 °C aufweist und insbesondere auch bei einer Temperatur von deutlich unter 100 °C in flüssigem Zustand vorliegt. Das Kation oder eines der Kationen kann ein Ammonium-Ion, ein substituiertes Ammonium-Ion, insbesondere ein Tetraalkylammonium-Ion, ein Phosphonium-Ion, ein substituiertes Phosphonium-Ion, insbesondere ein Tetraalkylphosphonium-lon, ein N-monosubstituiertes oder ein N-disubstituiertes Pyrrolidinium-Ion, ein N-monosubstituiertes oder ein N',N-disubstituiertes Imidazolium-Ion oder ein N-monosubstituiertes Pyridinium-Ion sein. Das Anion oder eines der Anionen kann ein Halogenid-Ion, ein Tetrafluoroborat-Ion, ein Hexafluorophosphat-Ion, ein Cyanoborat-Ion, ein substituiertes Cyanoborat-Ion, insbesondere ein Perfluoralkylcyanoborat-Ion, ein Sulfonat-lon, insbesondere ein Perfluoralkylsulfonat-Ion, ein Bisperfluoralkylimid-Ion, ein Borat-Ion, ein substituiertes Borat-Ion, insbesondere ein Perfluoralkylborat-Ion, ein Phosphat-Ion, ein substituiertes Phosphat-Ion, insbesondere ein Perfluoralkylphosphat-Ion, oder ein Perfluoralkylfluorophosphat-Ion, sein. Der Bezeichnungsbestandteil "Perfluoralkyl" bezeichnet dabei allgemein einen aliphatischen Stoff, bei dem alle Wasserstoff-Atome, die an Kohlenstoff-Atome des davon abgeleiteten, nicht fluorierten Stoffes gebunden sind durch Fluor-Atome ersetzt sind, mit Ausnahme der Wasserstoff-Atome, deren Substitution die Art der vorhandenen funktionellen Gruppen verändern würde.

In einer Ausführungsform der Erfindung ist ein Substituent des N-monosubstituierten Pyrrolidinium-lons, des N-monosubstituierten Imidazolium-Ions und des N-monosubstituierten Pyridinium-Ions, und mindestens ein Substituent des N',N-disubstituierten Imidazolium-lons, und mindestens ein Substituent des N-disubstituierten Pyrrolidinium-Ions unabhängig voneinander aus Alkyl, insbesondere Methyl, Ethyl, Propyl oder Butyl, Benzyl und Aryl ausgewählt.

Das Bis(perfluoralkyl)imid-Ion kann ein Ion mit der allgemeinen Formel [N(SO₂R^{F}ₓ)₂]⁻ sein, wobei x die Zahl der C-Atome im Perfluoralkylsubstituent R^{F} angibt. Vorzugsweise ist x= 1.

Der Perfluoralkylsubstituent R^{F} hat dabei die allgemeine Formel CₓF₂ₓ₊₁. Ist x = 1 ist der Perfluoralkylsubstituent Perfluormethyl mit der Summenformel -CF₃. Ist x = 2 ist der Perfluoralkylsubstituent Perfluorethyl mit der Summenformel -C₂F₅. Ist x = 3 ist der Perfluoralkylsubstituent Perfluorpropyl mit der Summenformel -C₃F₇.

Das (Perfluoralkyl)(fluoro)(cyano)borat-Ion kann ein Ion mit der allgemeinen Formel [R^{F}*ₓ*BF*_{y}*(CN)*_{z}*]⁻ sein, wobei *x* = 0-4, wobei *y* = 0-3, wobei *z* = 0-4, wobei *x* + *y* + *z* = 4. Ist *x* = 0 handelt es sich um ein Fluorocyanoborat-Ion. Ist y = 0 handelt es sich um ein Perfluoralkylcyanoborat-lon. Ist *z* = 0 handelt es sich um ein Perfluoralkylfluoroborat-Ion. Ist *x* = 0 und ist *y* = 0, handelt es sich um ein Tetracyanoborat-Ion. Ist *x* = 0 und ist *z* = 0, handelt es sich um ein Tetrafluoroborat-Ion. Ist *y* = 0 und ist *z* = 0 handelt es sich um ein Tetrakis(perfluoralkyl)borat-lon.

Das Perfluoralkyl(fluoro)phosphat-Ion kann ein Ion mit der allgemeinen Formel [R^{F}*ₓ*PF_{6-*x*}]⁻sein, wobei *x* = 1-3. Ist *x* = 0 handelt es sich um ein Hexafluorophosphat-Ion.

Die Erfinder haben festgestellt, dass eine ionische Flüssigkeit, insbesondere eine ionische Flüssigkeit, die ein N-disubstituiertes Pyrrolidinium-Ion enthält, mit mindestens einem Alkylsubstituenten, insbesondere Methyl oder Butyl, oder mit zwei unterschiedlichen Alkylsubstituenten, insbesondere Methyl und Butyl, vorteilhaft ist. Die Erfinder haben weiterhin festgestellt, dass eine ionische Flüssigkeit, insbesondere eine ionische Flüssigkeit, die ein relativ hydrophobes Anion, insbesondere ein Cyanoborat-Ion, ein Perfluoralkylcyanoborat-lon, ein Perfluoralkylsulfonat-Ion, ein Bisperfluoralkylimid-Ion, ein Perfluoralkylborat-Ion, ein Perfluoralkylphosphat-Ion oder ein Perfluoralkylfluorophosphat-Ion, enthält, vorteilhaft ist. Durch ein Kation mit mindestens einem Alkylsubstituenten und/oder ein relativ hydrophobes Anion wird eine relativ hohe Hydrophobizität der ionischen Flüssigkeit gewährleistet. Eine relativ hohe Hydrophobizität der ionischen Flüssigkeit gewährleistet hierbei eine relativ geringe Hygroskopizität der ionischen Flüssigkeit. Die Erfinder haben weiterhin festgestellt, dass eine relativ geringe Hygroskopizität der ionischen Flüssigkeit in der erfindungsgemäßen Zusammensetzung eine relativ hohe Stabilität des relativ hydrolyseempfindlichen Kaliumsuperoxids gewährleistet. Die Erfinder haben des Weiteren festgestellt, dass eine ionische Flüssigkeit, insbesondere eine ionische Flüssigkeit, die ein Halogenid-Ion, ein Tetrafluoroborat-Ion, ein Hexafluorophosphat-Ion, ein Perfluoralkylcyanoborat-lon, insbesondere ein Perfluoralkylsulfonat-Ion, ein Bisperfluoralkylimid-Ion, ein Perfluoralkylborat-Ion, ein Perfluoralkylphosphat-Ion oder ein Perfluoralkylfluorophosphat-lon enthält, zudem eine relativ hohe elektrochemische Stabilität der ionischen Flüssigkeit gewährleistet. Die Erfinder gehen davon aus, dass die relativ hohe elektrochemische Stabilität insbesondere durch elektronegative Substituenten, insbesondere FluorSubstituenten, Perfluoralkyl-Substituenten und Cyano-Substituenten, gewährleistet wird. Die Erfinder haben des Weiteren festgestellt, dass eine relativ hohe elektrochemische Stabilität der ionischen Flüssigkeit verhindert, dass die ionische Flüssigkeit eine Reaktion mit einer reaktiven lonenspezies, insbesondere Superoxid-Ionen, in der erfindungsgemäßen Zusammensetzung eingeht.

Zudem haben die Erfinder festgestellt, dass eine ionische Flüssigkeit, insbesondere eine ionische Flüssigkeit, die ein N-disubstituiertes Pyrrolidinium-Ion und/oder ein relativ hydrophobes Anion, insbesondere ein Cyanoborat-Ion, ein Perfluoralkylcyanoborat-Ion, ein Perfluoralkylsulfonat-Ion, ein Bisperfluoralkylimid-Ion, ein Perfluoralkylborat-Ion, ein Perfluoralkylphosphat-lon oder ein Perfluoralkylfluorophosphat-Ion, enthält, in der erfindungsgemäßen Zusammensetzung eine relativ gleichmäße Erzeugung von Sauerstoff über einen relativ langen Zeitraum gewährleistet.

Die ionische Flüssigkeit kann eine ionische Flüssigkeit sein, die in einem Temperaturbereich von -60 °C bis +150 °C, insbesondere in einem Temperaturbereich von -55 °C bis +140 °C, insbesondere in einem Temperaturbereich von -50 °C bis +130 °C, insbesondere in einem Temperaturbereich von -45 °C bis +120 °C, insbesondere in einem Temperaturbereich von -40 °C bis +110 °C, insbesondere in einem Temperaturbereich von -35 °C bis +100 °C, insbesondere in einem Temperaturbereich von -30 °C bis +90 °C, insbesondere in einem Temperaturbereich von -25 °C bis +80 °C, insbesondere in einem Temperaturbereich von -20 °C bis +70 °C, in flüssigem Zustand ist.

Beispiele geeigneter ionischer Flüssigkeiten sind [BMPL]Cl, [BMPL][CF₃SO₃], [BMPL][C₂F₅SO₃], [BMPL][C₄F₉SO₃], [BMPL][N(SO₂CF₃)₂], [BMPL][BF₄], [BMPL][BF₂(CN)₂], [BMPL][BF(CN)₃], [BMPL][B(CN)₄], [BMPL][CF₃BF₃], [BMPL][C₂F₅BF₃], [BMPL][CF₃BF₂(CN)], [BMPL][C₂F₅BF₂(CN)], [BMPL][CF₃BF(CN)₂], [BMPL][C₂F₅BF(CN)₂], [BMPL][CF₃B(CN)₃], [BMPL][C₂F₅B(CN)₃], [BMPL][PF₆], [BMPL][C₂F₅PF₅], [BMPL][(C₂F₅)₂PF₄], [BMPL][(C₂F₅)₃PF₃], [HMIm]Cl, [HMIm][CF₃SO₃], [HMIm][C₂F₅SO₃], [HMIm][C₄F₉SO₃], [HMIm][N(SO₂CF₃)₂], [HMIm][BF₄], [HMIm][BF₂(CN)₂], [HMIm][BF(CN)₃], [HMIm][B(CN)₄], [HMIm][CF₃BF₃], [HMIm][C₂F₅BF₃], [HMIm][CF₃BF₂(CN)], [HMIm][C₂F₅BF₂(CN)], [HMIm][CF₃BF(CN)₂], [HMIm][C₂F₅BF(CN)₂], [HMIm][CF₃B(CN)₃], [HMIm][C₂F₅B(CN)₃], [HMIm][PF₆], [HMIm][C₂F₅PF₅], [HMIm][(C₂F₅)₂PF₄], [HMIm][(C₂F₅)₃PF₃], [BMIm]Cl, [BMIm][CF₃SO₃], [BMIm][C₂F₅SO₃], [BMIm][C₄F₉SO₃], [BMIm][N(SO₂CF₃)₂], [BMIm][BF₄], [BMIm][BF₂(CN)₂], [BMIm][BF(CN)₃], [BMIm][B(CN)₄], [BMIm][CF₃BF₃], [BMIm][C₂F₅BF₃], [BMIm][CF₃BF₂(CN)], [BMIm][C₂F₅BF₂(CN)], [BMIm][CF₃BF(CN)₂], [BMIm][C₂F₅BF(CN)₂], [BMIm][CF₃B(CN)₃], [BMIm][C₂F₅B(CN)₃], [BMIm][PF₆], [BMIm][C₂F₅PF₅], [BMIm][(C₂F₅)₂PF₄], [BMIm][(C₂F₅)₃PF₃], [EMIm][CF₃SO₃], [EMIm][C₂F₅SO₃], [EMIm][C₄F₉SO₃], [EMIm][N(SO₂CF₃)₂], [EMIm][BF₄], [EMIm][BF₂(CN)₂], [EMIm][BF(CN)₃], [EMIm][B(CN)₄], [EMIm][CF₃BF₃], [EMIm][C₂F₅BF₃], [EMIm][CF₃BF₂(CN)], [EMIm][C₂F₅BF₂(CN)], [EMIm][CF₃BF(CN)₂], [EMIm][C₂F₅BF(CN)₂], [EMIm][CF₃B(CN)₃], [EMIm][C₂F₅B(CN)₃], [EMIm][PF₆], [EMIm][C₂F₅PF₅], [EMIm][(C₂F₅)₂PF₄], und [EMIm][(C₂F₅)₃PF₃]. Weitere Beispiele geeigneter ionischer Flüssigkeiten sind [MMIm][SO₄Me], [EMIm][SO₄Et], [BMIm][SO₄Me], [BMIm][SO₄Bu], [MMIm][PO₄Me₂], [EMIm][PO₄Et₂], [EEIm][PO₄Et₂], [BMIm][PO₄Me₂], [BMIm][PO₄Bu₂], [EMIm][H₂PO₄], [EMIm][HSO₄], [BMIm][FeCl₄], sowie [BMIm][BF₄], [BMIm][PF₆], [HMIm][BF₄], [HMIm][PF₆], Dabei gilt folgende Nomenklatur: Die erste eckige Klammer beinhaltet das Kation und die zweite eckige Klammer das Anion. Zusätzlich gelten folgende etablierte Abkürzungen: BMPL: 1-Butyl-1-methylpyrrolidinium, BMIm: 1-Butyl-3-Methylimidazolium, HMIm: 1-Hexyl-3-Methylimidazolium, EMIm: 1-Ethyl-3-Methylimidazolium, SO₄Me: Methylsulfat, SO₄Et: Ethylsulfat, SO₄Bu: Butylsulfat, PO₄Me₂: Dimethylposphat, PO₄Et₂: Diethylphosphat, PO₄Bu₂: Dibutylphosphat, HSO₄: Hydrogensulfat, H₂PO₄: Dihydrogenphosphat, FeCl₄: Tetrachloroferrat, BF₄: Tetrafluoroborat und PF₆: Hexafluorophosphat.

Zur Veranschaulichung sind im Folgenden drei verschiedene ionische Flüssigkeiten mit Strukturformeln gezeigt.

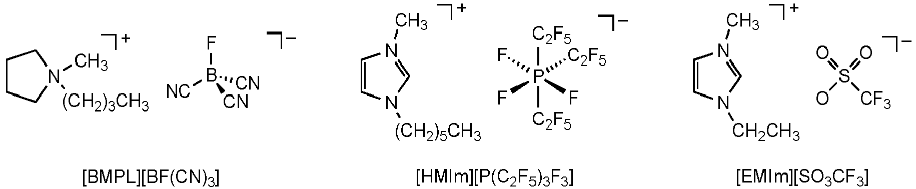

Die Wasser enthaltende Lösung kann eine solche Menge des weiteren Salzes oder des weiteren Salzes zusammen mit einer solchen Menge des Gefrierschutzmittels oder die Wasser enthaltende Mischung eine solche Menge des Gefrierschutzmittels enthalten, dass der Gefrierpunkt der Lösung oder der Mischung gegenüber dem Gefrierpunkt des Wassers um mindestens 15 °C, insbesondere um mindestens 20 °C, insbesondere um mindestens 25 °C, insbesondere um mindestens 30 °C, insbesondere um mindestens 35 °C, insbesondere um mindestens 40 °C, insbesondere um mindestens 45 °C, insbesondere um mindestens 50 °C, herabgesetzt ist. Bei der Wasser enthaltenden Lösung oder bei der Wasser enthaltenden Mischung handelt es sich jeweils um eine tiefgefrierende Lösung oder um eine tiefgefrierende Mischung. Dadurch, dass der Gefrierpunkt auf eine relativ niedrige Temperatur herabgesetzt ist, wird dank des flüssigen Zustands der Wasser enthaltenden Lösung oder der Wasser enthaltenden Mischung eine Sauerstofferzeugung bei relativ niedrigen Temperaturen gewährleistet.

Das Alkalimetallhydroxid kann Lithiumhydroxid, Natriumhydroxid, Kaliumhydroxid, Rubidiumhydroxid oder Caesiumhydroxid sein. Das Alkalimetallhydroxid kann insbesondere Kaliumhydroxid sein. Das Alkalimetallhydroxid-Hydrat kann ein Hydrat von Lithiumhydroxid, ein Hydrat von Natriumhydroxid, ein Hydrat von Kaliumhydroxid, ein Hydrat von Rubidiumhydroxid oder ein Hydrat von Caesiumhydroxid sein. Das Alkalimetallchlorid kann Lithiumchlorid, Natriumchlorid, Kaliumchlorid, Rubidiumchlorid oder Caesiumchlorid sein. Das Alkalimetallchlorid-Hydrat kann ein Hydrat von Lithiumchlorid sein. Das Hydroxid mit einem organischen Kation kann ein Tetraalkylammonium-Hydroxid sein. Das Tetraalkylammonium-Hydroxid kann Tetramethylammonium-Hydroxid, Tetraethylammonium-Hydroxid, Tetrapropylammonium-Hydroxid, Tetrabutylammonium-Hydroxid, Triethylmethylammonium-Hydroxid, Tetrapentylammonium-Hydroxid oder Tetrahexylammonium-Hydroxid sein. Das Hydrat eines Hydroxids mit einem organischen Kation kann ein Hydrat eines Tetraalkylammonium-Hydroxids sein. Das Hydrat des Tetraalkylammonium-Hydroxids kann ein Hydrat von Tetramethylammonium-Hydroxid, ein Hydrat von Tetraethylammonium-Hydroxid, ein Hydrat von Tetrapropylammonium-Hydroxid, ein Hydrat von Tetrabutylammonium-Hydroxid, ein Hydrat von Triethylmethylammonium-Hydroxid, ein Hydrat von Tetrapentylammonium-Hydroxid oder ein Hydrat von Tetrahexylammonium-Hydroxid sein.

Das Tetraalkylammonium-Hydroxid oder das Hydrat des Tetraalklyammonium-Hydroxids kann in Wasser oder in einem einwertigen Alkohol, insbesondere Methanol, Ethanol, Propanol oder Isopropanol, gelöst vorliegen. Das Gesamtgewicht des Tetraalkylammonium-Hydroxids oder des Hydrats des Tetraalkylammonium-Hydroxids im Verhältnis zum Gesamtgewicht der Lösung oder der Mischung kann mindestens 5 Gew.-% und höchstens 80 Gew.-%, insbesondere mindestens 10 Gew.-% und höchstens 70 Gew.-%, insbesondere mindestens 20 Gew.-% und höchstens 60 Gew.-%, insbesondere mindestens 30 Gew.-% und höchstens 50 Gew.-%, betragen.

Das Gefrierschutzmittel kann einen einwertigen Alkohol, insbesondere Ethanol oder Octanol, einen zweiwertigen Alkohol, insbesondere Propylenglycol oder Ethylenglycol, einen dreiwertigen Alkohol, insbesondere Glycerol, oder ein Gemisch von mindestens zwei ausgewählt aus einem einwertigen Alkohol, insbesondere Ethanol oder Octanol, einem zweiwertigen Alkohol, insbesondere Propylenglycol oder Ethylenglycol, und einem dreiwertigen Alkohol, insbesondere Glycerol, umfassen. Alternativ kann das Gefrierschutzmittel aus einem einwertigen Alkohol, insbesondere Ethanol oder Octanol, einem zweiwertigen Alkohol, insbesondere Propylenglycol oder Ethylenglycol, einem dreiwertigen Alkohol, insbesondere Glycerol, oder einem Gemisch von mindestens zwei ausgewählt aus einem einwertigen Alkohol, insbesondere Ethanol oder Octanol, einem zweiwertigen Alkohol, insbesondere Propylenglycol oder Ethylenglycol, und einem dreiwertigen Alkohol, insbesondere Glycerol, bestehen.

Das Gesamtgewicht des weiteren Salzes oder das Gesamtgewicht des weiteren Salzes zusammen mit dem Gesamtgewicht des Gefrierschutzmittels in der Wasser enthaltenden Lösung im Verhältnis zum Gesamtgewicht der Wasser enthaltenden Lösung oder das Gesamtgewicht des Gefrierschutzmittels in der Wasser enthaltenden Mischung im Verhältnis zum Gesamtgewicht der Wasser enthaltenden Mischung kann mindestens 5 Gew.-%, insbesondere mindestens 10 Gew.-%, insbesondere mindestens 15 Gew.-%, insbesondere mindestens 20 Gew.-%, insbesondere mindestens 25 Gew.-%, insbesondere mindestens 28 Gew.-%, insbesondere mindestens 30 Gew.-%, insbesondere mindestens 35 Gew.-%, insbesondere mindestens 40 Gew.-%, insbesondere mindestens 45 Gew.-%, insbesondere mindestens 50 Gew.-% betragen. Das maximale Gesamtgewicht des weiteren Salzes im Verhältnis zum Gesamtgewicht der Wasser enthaltenden Lösung ist erreicht, wenn die Wasser enthaltende Lösung mit dem weiteren Salz gesättigt ist. Die Wasser enthaltende Lösung kann eine gesättigte wässrige Lösung des weiteren Salzes der Wasser enthaltenden Lösung sein. Unter einer gesättigten wässrigen Lösung des weiteren Salzes der Wasser enthaltenden Lösung ist eine wässrige Lösung des weiteren Salzes zu verstehen, bei der bei einer gegebenen Temperatur eine maximal mögliche Menge des weiteren Salzes gelöst vorliegt. Das weitere Salz kann in der Wasser enthaltenden Lösung auch in einer solchen Menge vorliegen, dass das weitere Salz in der Wasser enthaltenden Lösung teilweise ungelöst, insbesondere in Form einer Suspension, vorliegt.

Die Erfinder haben festgestellt, dass ein relativ hohes Gesamtgewicht des weiteren Salzes oder des weiteren Salzes zusammen mit dem Gesamtgewicht des Gefrierschutzmittels der Wasser enthaltenden Lösung oder des Gefrierschutzmittels in der Wasser enthaltenden Mischung im Verhältnis zum Gesamtgewicht der Wasser enthaltenden Lösung bzw. Mischung bei dem daraus resultierenden relativ niedrigen Gefrierpunkt der Lösung bzw. Mischung eine ausreichende Sauerstofferzeugung auch bei einer Temperatur weit unter 0 °C ermöglicht. Die Sauerstofferzeugung wird durch den flüssigen Zustand der Lösung bzw. Mischung bei relativ niedrigen Temperaturen ermöglicht. Das weitere Salz und/oder das Gefrierschutzmittel können in der Lösung bzw. Mischung in einer solchen Konzentration vorliegen, dass die Wasser enthaltende Lösung bzw. Mischung bei einer Temperatur in einem Temperaturbereich von -80 °C bis 0 °C, insbesondere bei einer Temperatur in einem Temperaturbereich von -60 °C bis 0 °C, insbesondere bei einer Temperatur in einem Temperaturbereich von -50 °C bis -10 °C, insbesondere bei einer Temperatur in einem Temperaturbereich von -40 °C bis -20 °C, insbesondere bei einer Temperatur in einem Temperaturbereich von -35 °C bis -25 °C, flüssig ist. Dadurch wird die Erzeugung von Sauerstoff durch die erfindungsgemäße Zusammensetzung auch bei relativ niedrigen Temperaturen, insbesondere bei einer Temperatur in den genannten Temperaturbereichen, gewährleistet.

Das weitere Salz in der Wasser enthaltenden Lösung kann insbesondere Kaliumhydroxid sein. Die Erfinder haben festgestellt, dass bei einem Gesamtgewicht des Kaliumhydroxids von 25 Gew.-% im Verhältnis zum Gesamtgewicht der Wasser enthaltenden Lösung der Gefrierpunkt der Wasser enthaltenden Lösung bei -40 °C liegt. Die Erfinder haben weiterhin festgestellt, dass bei einem Gesamtgewicht des Kaliumhydroxids von 28 Gew.-% im Verhältnis zum Gesamtgewicht der Wasser enthaltenden Lösung der Gefrierpunkt der wässrigen Lösung des weiteren Salzes bei -50 °C liegt. Sie haben weiterhin festgestellt, dass die Zusammensetzung Sauerstoff erzeugt, solange die Wasser enthaltende Lösung oder Mischung flüssig ist, d.h. auch bei einer Temperatur, die nur so wenig über dem Gefrierpunkt liegt, dass die Wasser enthaltende Lösung oder Mischung noch flüssig ist.

Die Sauerstoffquelle kann, insbesondere als Reinstoff, in fester Form vorliegen. Insbesondere kann sie als ein bei 25 °C in fester Form vorliegender Reinstoff vorliegen. Die Sauerstoffquelle kann in der ionischen Flüssigkeit, insbesondere in einer wasserfreien ionischen Flüssigkeit, in suspendierter Form, insbesondere in Form einer Paste, vorliegen. Die Sauerstoffquelle und die ionische Flüssigkeit, insbesondere eine wasserfreie ionische Flüssigkeit, können in miteinander verpresster Form vorliegen, wobei die, insbesondere wasserfreie, ionische Flüssigkeit als Bindemittel dient. Die Sauerstoffquelle und die ionische Flüssigkeit können dadurch als ein in fester Form vorliegender, durch Verpressung entstandener Formkörper vorliegen. Die ionische Flüssigkeit wird nicht nur dann als wasserfrei erachtet, wenn sie kein Wasser enthält, sondern auch dann, wenn sie nur Spuren von Wasser, insbesondere einen Wassergehalt von höchstens 1 Gew.-%, insbesondere von höchstens 0.5 Gew.-%, insbesondere von höchstens 0.1 Gew.-%, insbesondere von höchstens 0.05 Gew.-%, insbesondere von höchstens 0.01 Gew.-%, insbesondere von höchstens 0.005 Gew.-%, insbesondere von höchstens 0.001 Gew.-%, enthält.

Die Erfinder haben festgestellt, dass in der erfindungsgemäßen Zusammensetzung keine chemische Reaktion oder allenfalls eine chemische Reaktion bis zum Verbrauch des in Spuren enthaltenen Wassers zwischen der Sauerstoffquelle und der wasserfreien ionischen Flüssigkeit stattfindet. Zudem wird dadurch, dass die Sauerstoffquelle in der ionischen Flüssigkeit in suspendierter Form, insbesondere in Form einer Paste, vorliegt oder dadurch, dass die Sauerstoffquelle und die ionische Flüssigkeit in verpresster Form mit der ionischen Flüssigkeit als Bindemittel vorliegen, gewährleistet, dass die Sauerstoffquelle vor einem ungewollten Kontakt mit Wasser, insbesondere mit Luftfeuchtigkeit, relativ gut geschützt ist. Der schützende Effekt der ionischen Flüssigkeit, insbesondere einer wasserfreien ionischen Flüssigkeit, ist dabei umso stärker, je hydrophober die ionische Flüssigkeit ist. Bei Kontakt der Sauerstoffquelle mit Wasser, insbesondere mit Luftfeuchtigkeit, erfolgt eine hydrolytische Reaktion des Wassers mit der Sauerstoffquelle. Die hydrolytische Reaktion der Sauerstoffquelle führt zu einer ungewollten Sauerstofffreisetzung durch Zersetzung der Sauerstoffquelle. Durch den schützenden Effekt der ionischen Flüssigkeit wird eine relativ hohe Stabilität der Sauerstoffquelle gegenüber Luftfeuchtigkeit gewährleistet.

Zudem haben die Erfinder festgestellt, dass durch ein Vorliegen der Sauerstoffquelle in suspendierter Form in der ionischen Flüssigkeit, insbesondere in Form einer Paste, oder durch ein Vorliegen der Sauerstoffquelle und der ionischen Flüssigkeit in verpresster Form mit der ionischen Flüssigkeit als Bindemittel eine relativ gleichmäßige Erzeugung von Sauerstoff über einen relativ langen Zeitraum, insbesondere über einen Zeitraum von mindestens 2 Stunden, insbesondere über einen Zeitraum von mindestens 2,5 Stunden, insbesondere über einen Zeitraum von mindestens 3 Stunden, insbesondere über einen Zeitraum von mindestens 3,5 Stunden, gewährleistet werden kann.

In einer Ausführungsform der Erfindung umfasst die Zusammensetzung als weiteren Bestandteil mindestens ein Additiv. Das Additiv kann unabhängig voneinander aus als Feststoff vorliegendem Natriumdihydrogenphosphat oder Kaliumhydroxid, einem Zuschlagstoff und einem Antischaummittel ausgewählt sein. Der Zuschlagstoff kann ein Schichtsilikat, insbesondere Glimmer, oder pyrogene Kieselsäure sein. Das Antischaummittel kann Octanol, Paraffinwachs oder ein Polysiloxan umfassen oder daraus bestehen. Die Sauerstoffquelle und das Additiv können miteinander in verpresster Form vorliegen. Die Sauerstoffquelle und das Additiv können miteinander in einem in fester Form vorliegenden, durch Verpressung entstandenen Formkörper vorliegen. Das Additiv kann entweder ein zur Beschleunigung oder zur Verlangsamung der Sauerstofferzeugung dienendes Additiv sein. Beispielsweise bewirkt ein saures Additiv, wie z.B. als Feststoff vorliegendes Natriumdihydrogenphosphat, eine Beschleunigung der Sauerstofferzeugung und ein basisches Additiv, wie z.B. als Feststoff vorliegendes Kaliumhydroxid, eine Verlangsamung der Sauerstofferzeugung. Die pyrogene Kieselsäure kann zudem verwendet werden, um ein Aufschwimmen der Sauerstoffquelle bei der Reaktion zur Erzeugung von Sauerstoff in der Wasser enthaltenden Lösung oder in der Wasser enthaltenden Mischung zu unterbinden. Das funktioniert besonders gut, wenn die Sauerstoffquelle und die pyrogene Kieselsäure miteinander in einem durch Verpressung entstandenen Formkörper vorliegen. Dadurch, dass das Aufschwimmen der Sauerstoffquelle unterbunden wird, wird eine relativ gleichmäßige Zersetzung der Sauerstoffquelle bei der Reaktion zur Erzeugung von Sauerstoff in der Wasser enthaltenden Lösung oder in der Wasser enthaltenden Mischung gewährleistet. Das Antischaummittel kann eine Schaumbildung bei der Erzeugung des Sauerstoffs unterbinden und/oder den bei der Erzeugung des Sauerstoffs entstandenen Schaum zerstören. Mindestens ein Additiv kann in der Zusammensetzung in einer Form vorhanden sein, die eine verzögerte Freisetzung des Additivs bewirkt. Zum Beispiel kann es dazu in einer Kapsel eingekapselt sein, die sich langsam auflöst, wenn sie mit der ionischen Flüssigkeit, der Wasser enthaltenden Lösung oder der Wasser enthaltenden Mischung in Kontakt kommt.

Das Gesamtgewicht der Sauerstoffquelle im Verhältnis zum Gesamtgewicht der erfindungsgemäßen Zusammensetzung kann mindestens 5 Gew.-% und höchstens 90 Gew.-%, insbesondere mindestens 20 Gew.-% und höchstens 80 Gew.-%, betragen. Das Gesamtgewicht der ionischen Flüssigkeit im Verhältnis zum Gesamtgewicht der erfindungsgemäßen Zusammensetzung kann mindestens 0,5 Gew.-% und höchstens 25 Gew.-%, insbesondere mindestens 2 Gew.-% und höchstens 15 Gew.-%, betragen. Der verbleibende Teil der Zusammensetzung besteht dabei aus der Wasser enthaltenden Lösung oder der Wasser enthaltenden Mischung und optional dem weiteren Bestandteil. Die Erfinder haben festgestellt, dass ein relativ hohes Gesamtgewicht der ionischen Flüssigkeit im Verhältnis zum Gesamtgewicht der erfindungsgemäßen Zusammensetzung eine relativ gleichmäßige Erzeugung von Sauerstoff über einen relativ langen Zeitraum gewährleistet.

Die Sauerstoffquelle, die ionische Flüssigkeit, das weitere Salz oder das weitere Salz und das Gefrierschutzmittel der Wasser enthaltenden Lösung, das Gefrierschutzmittel der Wasser enthaltenden Mischung, die Wasser enthaltende Lösung und/oder die Wasser enthaltende Mischung der erfindungsgemäßen Zusammensetzung können in einem Kit enthalten sein. Der Kit kann ferner jeden weiteren Bestandteil, insbesondere das Additiv, umfassen, der optional von der erfindungsgemäßen Zusammensetzung umfasst ist.

Die Erfindung betrifft ferner einen Sauerstoffgenerator, insbesondere zur Erzeugung von atembarem Sauerstoff, insbesondere für den Einsatz in Notfällen, wie beispielsweise in einem Notfallrettungssystem. Der Sauerstoffgenerator umfasst ein erstes und ein zweites Kompartiment, eine Öffnung zur Freisetzung oder eine Leitung zur Ableitung von im Sauerstoffgenerator entstehendem Sauerstoff und sämtliche Bestandteile der erfindungsgemäßen Zusammensetzung. Dabei sind die Sauerstoffquelle und die ionische Flüssigkeit in dem ersten Kompartiment und die Wasser enthaltende Lösung oder die Wasser enthaltende Mischung in dem zweiten Kompartiment enthalten. Der Sauerstoffgenerator umfasst eine das erste Kompartiment vom zweiten Kompartiment separierende physikalische Barriere und ein Mittel zur Überwindung der physikalischen Barriere, wobei die physikalische Barriere so angeordnet ist, dass die Sauerstoffquelle, die ionische Flüssigkeit und die Wasser enthaltende Lösung oder die Wasser enthaltende Mischung nach Überwindung der physikalischen Barriere miteinander in Kontakt kommen. Die Öffnung oder Leitung ist dabei so angeordnet, dass dadurch entstehender Sauerstoff durch die Öffnung oder durch die Leitung austritt.

Die physikalische Barriere kann ein Ventil sein, das durch das Mittel geöffnet werden kann. Die physikalische Barriere kann auch eine Membran oder eine Folie sein, wobei das Mittel zur Überwindung der physikalischen Barriere ein Mittel zum Entfernen, Zerstören oder Durchlochen der Membran oder Folie, insbesondere eine Klinge oder ein spitzer Gegenstand, ist. Die Folie kann eine Kunststofffolie oder eine Metallfolie sein.

Die in dem Sauerstoffgenerator enthaltenen Bestandteile der erfindungsgemäßen Zusammensetzung können neben der Sauerstoffquelle, der ionischen Flüssigkeit und der Wasser enthaltenden Lösung oder der Wasser enthaltenden Mischung optional jeden der oben genannten weiteren Bestandteile der erfindungsgemäßen Zusammensetzung, insbesondere das Additiv, umfassen. Das Additiv kann entweder in dem ersten Kompartiment oder in dem zweiten Kompartiment enthalten sein.

Der Sauerstoffgenerator kann zusätzlich mindestens ein Verzögerungsmittel umfassen. Das Verzögerungsmittel kann so angeordnet und insbesondere so ausgebildet sein, dass eine Gesamtmenge der im Sauerstoffgenerator vorhandenen Wasser enthaltenden Lösung oder eine Gesamtmenge der im Sauerstoffgenerator vorhandenen Wasser enthaltenden Mischung nach Überwindung der physikalischen Barriere erst nach und nach mit einer Gesamtmenge der im Sauerstoffgenerator vorhandenen Sauerstoffquelle in Kontakt kommt. Das Verzögerungsmittel kann eine die Sauerstoffquelle umgebende, semipermeable, d.h. gasdurchlässige und flüssigkeitsundurchlässige, Membran, die mindestens ein die Flüssigkeitszufuhr beschränkendes Loch aufweist, oder ein die Sauerstoffquelle umgebendes oder bedeckendes oder mit der Sauerstoffquelle vermischtes und gegenüber der Sauerstoffquelle und entweder der Wasser enthaltenden Lösung oder der Wasser enthaltenden Mischung inertes Schüttgut, insbesondere Sand oder Glasperlen, sein. Durch die Beschränkung der Flüssigkeitszufuhr wird das Inkontaktkommen der von der Membran umgebenen Sauerstoffquelle mit der Lösung oder Mischung verzögert, der Sauerstoffaustritt durch die Semipermeabilität der Membran jedoch nicht beschränkt. Die Erfinder haben festgestellt, dass durch das Verzögerungsmittel ein relativ schnelles Zersetzen der Sauerstoffquelle, insbesondere durch ein schnelles Inkontaktkommen der gesamten Sauerstoffquelle mit der gesamten Wasser enthaltenden Lösung oder mit der gesamten Wasser enthaltenden Mischung, verhindert wird. Zudem kann dadurch ein Aufschwimmen und/oder Aufschäumen der Sauerstoffquelle bei der Reaktion zur Erzeugung von Sauerstoff in der ionischen Flüssigkeit, in der Wasser enthaltenden Lösung und/oder in der Wasser enthaltenden Mischung verhindert werden. Damit wird eine relativ gleichmäßige Sauerstofffreisetzung über einen relativ langen Zeitraum begünstigt.

Die Erfindung betrifft ferner ein Verfahren zur Erzeugung von Sauerstoff, insbesondere von atembarem Sauerstoff, insbesondere für den Einsatz in Notfällen, wie beispielsweise in einem Notfallrettungssystem. Das Verfahren umfasst das Bereitstellen und das miteinander Inkontaktbringen der Sauerstoffquelle, der ionischen Flüssigkeit und der Wasser enthaltenden Lösung oder der Wasser enthaltenden Mischung der erfindungsgemäßen Zusammensetzung und optional des Additivs der erfindungsgemäßen Zusammensetzung.

Das Bereitstellen und/oder das miteinander Inkontaktbringen der Sauerstoffquelle, der ionischen Flüssigkeit und der Wasser enthaltenden Lösung oder der Wasser enthaltenden Mischung kann bei einer Temperatur in einem Bereich von -70 °C bis +110 °C, insbesondere in einem Bereich von -60 °C bis +70 °C, insbesondere in einem Bereich von -50 °C bis +50 °C, insbesondere in einem Bereich von -40 °C bis 0 °C, insbesondere in einem Bereich von -40 °C bis -20 °C erfolgen. Die Erfinder haben festgestellt, dass durch das miteinander Inkontaktbringen der Sauerstoffquelle, der ionischen Flüssigkeit und der Wasser enthaltenden Lösung oder der Wasser enthaltenden Mischung selbst bei einer relativ niedrigen Temperatur, insbesondere bei einer Temperatur in einem Bereich von -40 °C bis -20 °C, die Erzeugung von Sauerstoff durch die erfindungsgemäße Zusammensetzung unmittelbar erfolgt.

Die Erfinder haben weiterhin festgestellt, dass das erfindungsgemäße Verfahren eine skalierbare Erzeugung von Sauerstoff gewährleistet. Die Erfinder haben zudem festgestellt, dass das erfindungsgemäße Verfahren eine kontinuierliche und gleichmäßige Erzeugung von Sauerstoff in einem relativ großen Temperaturbereich, insbesondere in einem Temperaturbereich von -40 °C bis +70 °C, gewährleistet. Die Erfinder haben zudem festgestellt, dass das erfindungsgemäße Verfahren die Erzeugung von Sauerstoff ohne Atemgifte, insbesondere ohne Kohlenstoffmonoxid, ohne Ammoniak, ohne Chlor und ohne eine Chlorverbindung, gewährleistet.

Weiterhin betrifft die Erfindung eine Verwendung der Sauerstoffquelle, der ionischen Flüssigkeit und der Wasser enthaltenden Lösung oder der Wasser enthaltenden Mischung der erfindungsgemäßen Zusammensetzung und optional des Additivs der erfindungsgemäßen Zusammensetzung zur Erzeugung von, insbesondere atembarem Sauerstoff, insbesondere für den Einsatz in Notfällen, wie in einem Notfallrettungssystem. Bei der erfindungsgemäßen Verwendung kann es sich um eine Verwendung in einer hermetisch abgeschlossenen Umgebung, wie beispielsweise in einem U-Boot oder einer Raumkapsel, oder in einer Notfallsituation, wie beispielsweise bei einem plötzlichen Druckabfall in einem Flugzeug, handeln.

Alle in der Beschreibung angegebenen Merkmale sind als Merkmale zu verstehen, die auf alle Ausführungsformen der Erfindung anwendbar sind. Dies bedeutet beispielsweise, dass ein für die Zusammensetzung angegebenes Merkmal auch auf den Sauerstoffgenerator, das erfindungsgemäße Verfahren und/oder die erfindungsgemäße Verwendung angewendet werden kann und umgekehrt.

Die Erfindung wird anhand der folgenden Ausführungsbeispiele näher erläutert. Es zeigen
- Fig. 1: eine graphische Darstellung der Zersetzung von Kaliumsuperoxid an Umgebungsluft in Abhängigkeit der Formulierung und der Reaktionszeit,
- Fig. 2: ein schematischer Versuchsaufbau zur Bestimmung der Zersetzung,
- Fig. 3: ein ¹⁹F-NMR-Spektrum der ionischen Flüssigkeit vor und nach der Sauerstofffreisetzung aus Kaliumsuperoxid,
- Fig. 4: ein ¹¹B-NMR-Spektrum der ionischen Flüssigkeit vor und nach der Sauerstofffreisetzung aus Kaliumsuperoxid,
- Fig. 5: eine graphische Darstellung des bei den Reaktionen zur Freisetzung von Sauerstoff mit und ohne ionischer Flüssigkeit freigesetzten Sauerstoffvolumens in Abhängigkeit der Reaktionszeit,
- Fig. 6: eine graphische Darstellung der Sauerstoffflussraten in Abhängigkeit der Reaktionszeit bei Reaktionen zur Freisetzung von Sauerstoff mit und ohne ionischer Flüssigkeit,
- Fig. 7: eine graphische Darstellung des bei der Reaktion zur Freisetzung von Sauerstoff freigesetzten Sauerstoffvolumens in Abhängigkeit der Reaktionszeit,
- Fig. 8: eine graphische Darstellung des bei den Reaktionen zur Freisetzung von Sauerstoff freigesetzten Sauerstoffvolumens in Abhängigkeit der wässrigen Lösung und der Reaktionszeit,
- Fig. 9: eine graphische Darstellung des bei den Reaktionen zur Freisetzung von Sauerstoff freigesetzten Sauerstoffvolumens in Abhängigkeit der Umgebungstemperatur und der Reaktionszeit,
- Fig. 10: eine graphische Darstellung der Sauerstoffflussraten in Abhängigkeit der Umgebungstemperatur und der Reaktionszeit bei Reaktionen zur Freisetzung von Sauerstoff,
- Fig. 11: eine weitere graphische Darstellung des bei den Reaktionen zur Freisetzung von Sauerstoff mit und ohne ionischer Flüssigkeit freigesetzten Sauerstoffvolumens in Abhängigkeit der Reaktionszeit,
- Fig. 12: eine weitere graphische Darstellung der Sauerstoffflussraten in Abhängigkeit der Reaktionszeit bei Reaktionen zur Freisetzung von Sauerstoff mit und ohne ionischer Flüssigkeit,
- Fig. 13: eine weitere graphische Darstellung des bei der Reaktion zur Freisetzung von Sauerstoff freigesetzten Sauerstoffvolumens in Abhängigkeit der Reaktionszeit,
- Fig. 14: eine weitere graphische Darstellung der Sauerstoffflussrate in Abhängigkeit der Reaktionszeit bei der Reaktion zur Freisetzung von Sauerstoff,
- Fig. 15: eine graphische Darstellung des bei den Reaktionen zur Freisetzung von Sauerstoff freigesetzten Sauerstoffvolumens in Abhängigkeit der ionischen Flüssigkeit und der Reaktionszeit und
- Fig. 16: eine graphische Darstellung der Sauerstoffflussraten in Abhängigkeit der ionischen Flüssigkeit und der Reaktionszeit bei Reaktionen zur Freisetzung von Sauerstoff.

Die in den Figuren und im folgenden Text verwendete Abkürzung "IL" hat die Bedeutung "ionische Flüssigkeit".

### 1. Ausführungsbeispiel:

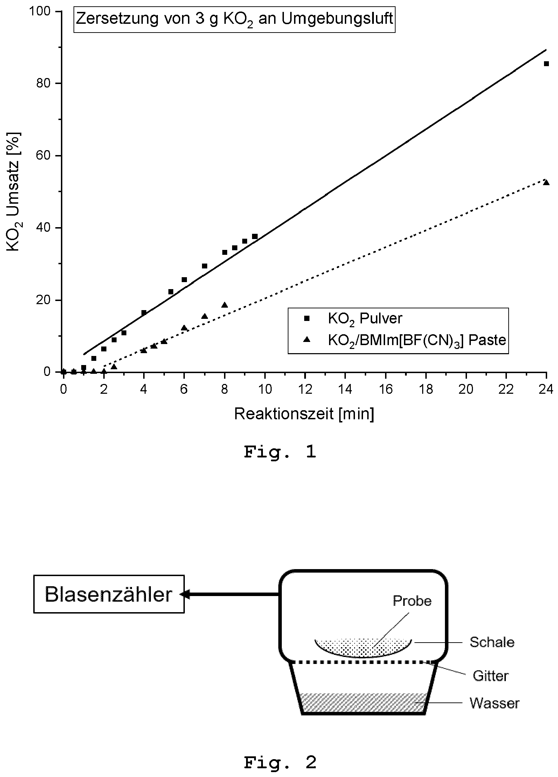

Zwei geschlossene Reaktionsgefäße wurden jeweils auf 19,5 °C temperiert und mit jeweils 2 mL destilliertem Wasser befüllt. Anschließend wurden entweder 3 g pulverförmiges Kaliumsuperoxid oder 6 g einer Paste bestehend aus 3 g Kaliumsuperoxid und 3 g ionischer Flüssigkeit [BMIm][BF(CN)₃] in je eines der Reaktionsgefäße gegeben, sodass jeweils kein Kontakt mit dem destillierten Wasser besteht. Die Reaktionsgefäße wurden jeweils 24 Stunden bei 19,5 °C inkubiert. Die freiwerdende Gasmenge wurde jeweils mit einem Blasenzähler bestimmt. Die ionische Flüssigkeit wurde vor und nach der Reaktion mittels ¹⁹F-NMR-Spektroskopie und ¹¹B-NMR-Spektroskopie analysiert. Die Ergebnisse sind in den Figuren 1, 3 und 4 und in der Tabelle 1 dargestellt. Ein schematischer Versuchsaufbau ist in der Figur 2 dargestellt.

**Tabelle 1:**

| Sauerstoffquelle | O₂ Entwicklung detektiert ab [h] | O₂ Entwicklung detektiert nach 24h [mL] | KO₂ Umsatz nach 24h [%] |
|---|---|---|---|
| KO₂ Pulver | 1 | 670 | 89 |
| KO₂/IL Paste | 2.5 | 410 | 54 |

Aus der Figur 1 und der Tabelle 1 ist ersichtlich, dass bei Kaliumsuperoxid als Pulver die Zersetzung des Kaliumsuperoxids nach einer Stunde einsetzt. Zudem ist ersichtlich, dass sich nach 24 Stunden Inkubationszeit 89 Gew.-% des eingesetzten Kaliumsuperoxids zersetzt haben. Die Zersetzung des Kaliumsuperoxids in der Paste setzt nach 2,5 Stunden ein. Zudem ist ersichtlich, dass sich nach 24 Stunden Inkubationszeit 54 % des eingesetzten Kaliumsuperoxids in der Paste zersetzt haben. Eine Paste bestehend aus Kaliumsuperoxid und ionischer Flüssigkeit erhöht die Stabilität des Kaliumsuperoxids in feuchter Atmosphäre.

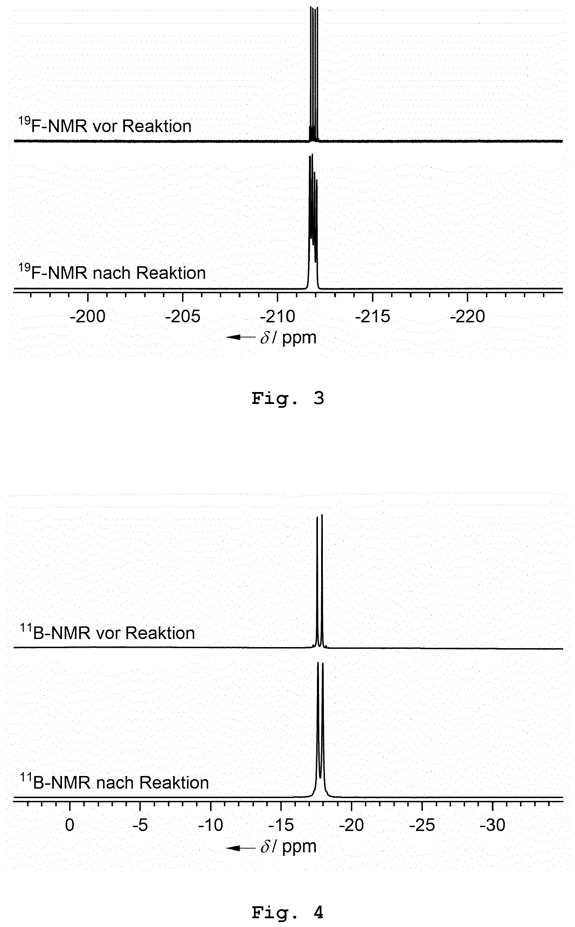

Aus den Figuren 3 und 4 ist ersichtlich, dass sich die ¹⁹F- und ¹¹B-NMR-Spektren der ionischen Flüssigkeit [BMIm][BF(CN)₃] vor und nach der obigen Zersetzungsreaktion nicht unterscheiden. Die ionische Flüssigkeit nimmt nicht an der Reaktion zur Sauerstofffreisetzung teil und wird chemisch nicht durch diese Reaktion verändert.

### 2. Ausführungsbeispiel:

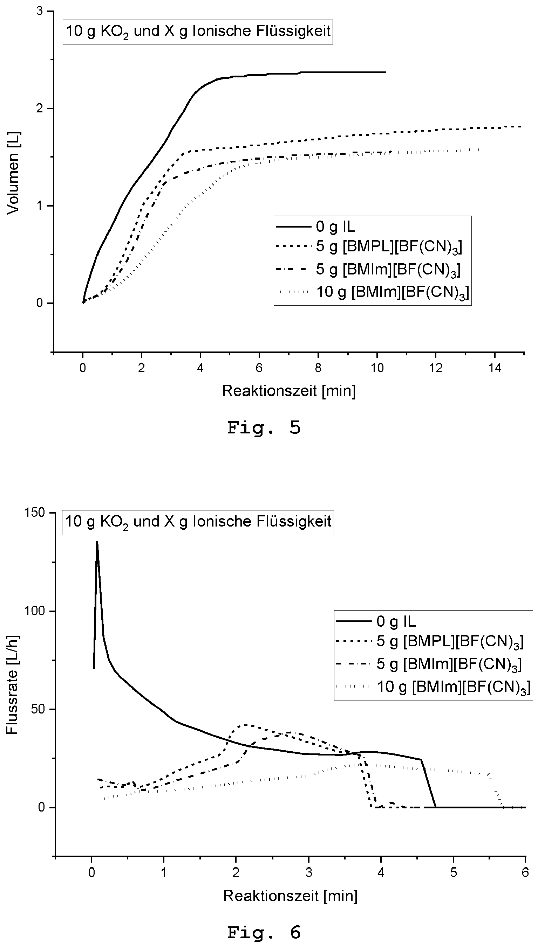

Jeweils 10 g pulverförmiges Kaliumsuperoxid wurden als Sauerstoffquelle in vier zylindrische Reaktionsgefäße mit einem Innendurchmesser von 28 mm vorgelegt. Zugegeben wurden entweder 5 g [BMPL][BF(CN)₃], 5 g [BMIm][BF(CN)₃] oder 10 g [BMIm][BF(CN)₃], In einem Reaktionsgefäß wurde keine ionische Flüssigkeit zugegeben. Anschließend wurde bei einer Umgebungstemperatur von Raumtemperatur die Reaktion zur Erzeugung von Sauerstoff durch Zugabe von jeweils 20 mL einer 9M Kaliumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Reaktion wurde nach 15 Minuten abgebrochen. Die Ergebnisse sind in den Figuren 5 und 6 und in der Tabelle 2 dargestellt.

**Tabelle 2:**

| | | | Nach 10 Minuten Reaktionszeit | |
|---|---|---|---|---|
| Ionische Flüssigkeit | Flussrateₘₐₓ [L/h] | Reaktions-temperatur [°C] | O₂ Volumen [L] | O₂ Volumen [%] |
| Ohne | 135 | 49 | 2.37 | 95 |
| 5 g [BMIm][BF(CN)₃] | 38 | 32 | 1.55 | 61 |
| 10 g [BMIm][BF(CN)₃] | 21 | 28 | 1.53 | 61 |
| 5 g [BMPL][BF(CN)₃] | 42 | 31 | 1.74 | 70 |

Daraus ist ersichtlich, dass ohne Zugabe einer ionischen Flüssigkeit die maximale Ausbeute an Gasvolumen von 2,37 L nach 10 Minuten Reaktionszeit erreicht wird. Durch Zugabe von 5 g [BMIm][BF(CN)₃] wird nach 10 Minuten Reaktionszeit eine maximale Ausbeute an Gasvolumen von 1,55 L erreicht. Durch Zugabe von 10 g [BMIm][BF(CN)₃] wird nach 10 Minuten Reaktionszeit eine maximale Ausbeute von 1,55 L erreicht. Durch Zugabe von 5 g [BMPL][BF(CN)₃] wird eine maximale Ausbeute von 1,82 L erreicht. Diese Reaktion wurde nach 15 Minuten abgebrochen. Das in dieser Reaktion theoretisch maximal erzeugbare Gasvolumen beträgt 2,51 L. Das durch die gemessenen Flussraten ermittelte Flusskurvenprofil verläuft durch Zugabe der ionischen Flüssigkeit deutlich Plateau-förmiger. Durch Zugabe der ionischen Flüssigkeit erfolgt die Sauerstofffreisetzung kontinuierlicher und gleichmäßiger.

### 3. Ausführungsbeispiel:

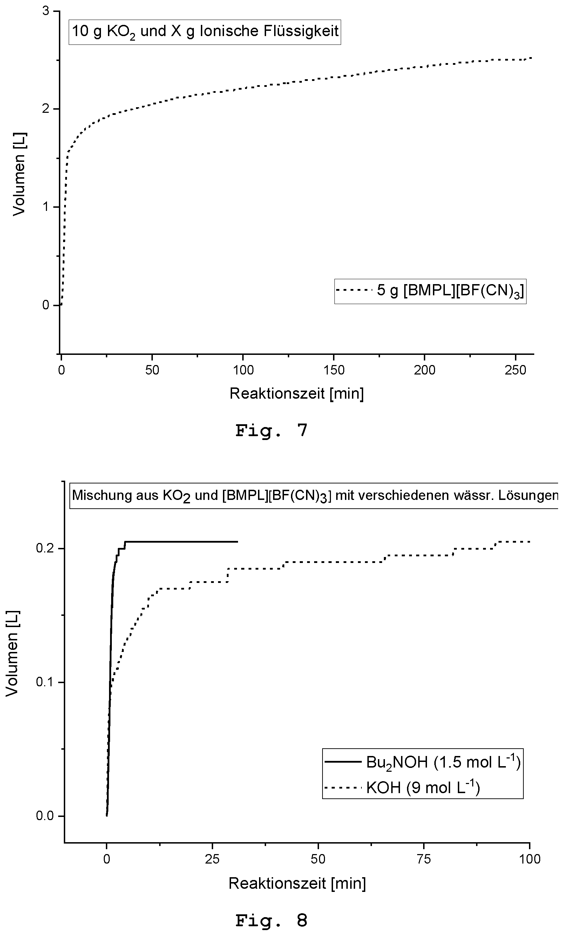

10 g pulverförmiges Kaliumsuperoxid wurde als Sauerstoffquelle in ein zylindrisches Reaktionsgefäß mit einem Innendurchmesser von 28 mm vorgelegt. Zugegeben wurden 5 g [BMPL][BF(CN)₃]. Anschließend wurde bei einer Umgebungstemperatur von Raumtemperatur die Reaktion zur Erzeugung von Sauerstoff durch Zugabe von jeweils 20 mL einer 9M Kaliumhydroxid-Lösung initiiert. Das Reaktionsgefäß wurde verschlossen und der durch die Reaktion zur Erzeugung von Sauerstoff freigesetzte Sauerstoff durch einen Trommelgaszähler zur Messung des Volumens des erzeugten Sauerstoffs aus dem Reaktionsgefäß geleitet. Zusätzlich wurde die Sauerstoffflussrate und die Länge der Reaktionszeit bis zur vollständigen Umsetzung des Kaliumsuperoxids gemessen. Das Ergebnis ist in der Figur 7 dargestellt. Daraus ist ersichtlich, dass bei Zugabe von [BMPL][BF(CN)₃] die maximale Ausbeute an Gasvolumen von 2520 mL nach 260 Minuten erreicht wird. Durch Zugabe der ionischen Flüssigkeit [BMPL][BF(CN)₃] erfolgt die Sauerstofffreisetzung kontinuierlich und gleichmäßig über einen langen Reaktionszeitraum.

### 4. Ausführungsbeispiel:

Jeweils 1 g pulverförmiges Kaliumsuperoxid wurde als Sauerstoffquelle in zwei zylindrische Reaktionsgefäße mit einem Innendurchmesser von 24 mm vorgelegt. Zugegeben wurden jeweils 0.5 g [BMPL][BF(CN)₃]. Anschließend wurde bei einer Umgebungstemperatur von Raumtemperatur die Reaktion zur Erzeugung von Sauerstoff durch Zugabe von entweder 2 mL einer wässrigen 9M Kaliumhydroxid-Lösung oder 2 mL einer wässrigen 1,5M Tetrabutylammoniumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurde die Länge der Reaktionszeit gemessen. Die Reaktion wurde nach 100 Minuten abgebrochen. Die Ergebnisse sind in der Figur 8 dargestellt. Daraus ist ersichtlich, dass ohne Zugabe einer wässrigen Tetrabutylammoniumhydroxid-Lösung die maximale Ausbeute an Gasvolumen von 0,21 L nach 4 Minuten Reaktionszeit erreicht wird. Durch Zugabe einer wässrigen Kaliumhydroxid-Lösung wird die maximale Ausbeute an Gasvolumen von 0,21 L nach 93 Minuten Reaktionszeit erreicht. Durch Zugabe der wässrigen Kaliumhydroxid-Lösung erfolgt die Sauerstofffreisetzung über einen längeren Zeitraum.

### 5. Ausführungsbeispiel:

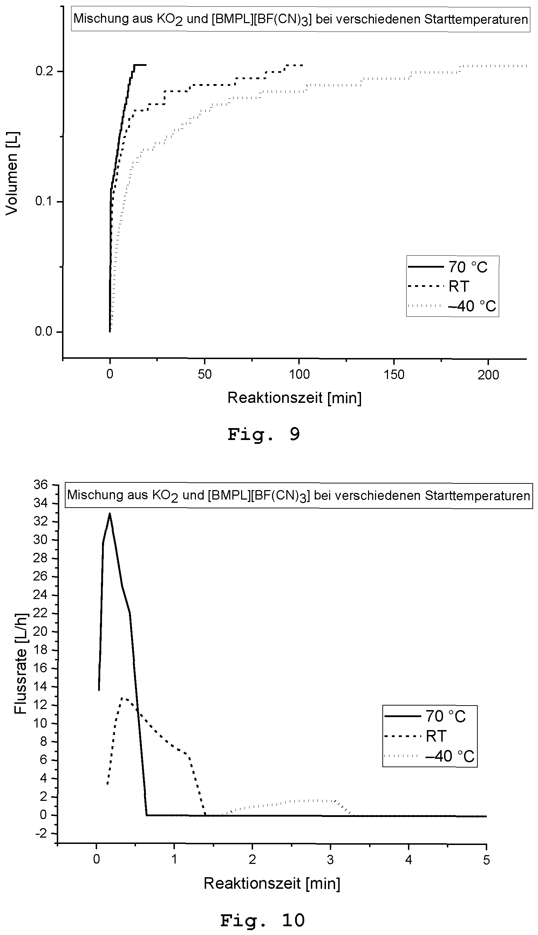

Jeweils 0.5 g [BMPL][BF(CN)₃] wurden zu 1 g pulverförmigem Kaliumsuperoxid als Sauerstoffquelle in drei zylindrische Reaktionsgefäße mit einem Innendurchmesser von 24 mm zugegeben. Bei einer Umgebungstemperatur von +70 °C, Raumtemperatur oder - 20 °C wurde die Reaktion zur Erzeugung von Sauerstoff durch Zugabe von jeweils 2 mL einer auf die jeweilige Umgebungstemperatur temperierten wässrigen 9M Kaliumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Ergebnisse sind in den Figuren 9 und 10 und in der Tabelle 3 dargestellt.

**Tabelle 3:**

| Starttemperatur [°C] | Flussrateₘₐₓ [L/h] | Reaktionsdauer [min] |
|---|---|---|
| -40 | 2 | 186 |
| RT | 13 | 87 |
| 70 | 33 | 13 |

Daraus ist ersichtlich, dass bei einer Umgebungstemperatur von 70 °C die maximale Ausbeute an Gasvolumen von 0,21 L nach 13 Minuten Reaktionszeit erreicht wird. Bei einer Umgebungstemperatur von Raumtemperatur wird die maximale Ausbeute an Gasvolumen von 0,21 L nach 87 Minuten Reaktionszeit erreicht. Bei einer Umgebungstemperatur von -40 °C wird die maximale Ausbeute an Gasvolumen von 0,21 L nach 186 Minuten Reaktionszeit erreicht. Das durch die gemessenen Flussraten ermittelte Flusskurvenprofil verläuft bei einer Umgebungstemperatur von -40 °C deutlich Plateau-förmiger. Durch eine Umgebungstemperatur von -40 °C erfolgt die Sauerstofffreisetzung kontinuierlicher und gleichmäßiger.

### 6. Ausführungsbeispiel:

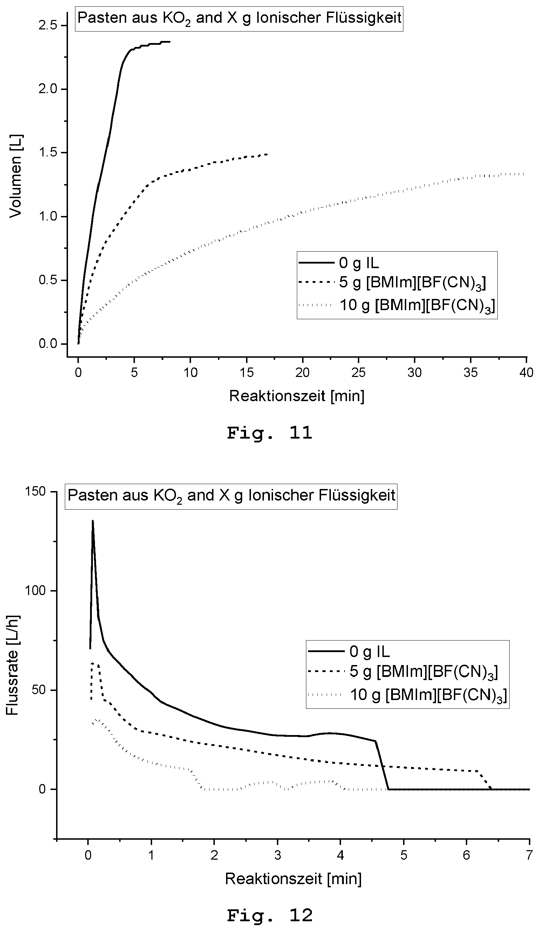

10 g pulverförmiges Kaliumsuperoxid wurde als Sauerstoffquelle in einem zylindrischen Reaktionsgefäß mit einem Innendurchmesser von 28 mm vorgelegt. In einem weiteren zylindrischen Reaktionsgefäß mit einem Innendurchmesser von 28 mm wurden 15 g einer Paste bestehend aus 10 g Kaliumsuperoxid als Sauerstoffquelle und 5 g [BMIm][BF(CN)₃] vorgelegt. In einem weiteren zylindrischen Reaktionsgefäß mit einem Innendurchmesser von 28 mm wurden 20 g einer Paste bestehend aus 10 g Kaliumsuperoxid als Sauerstoffquelle und 10 g [BMIm][BF(CN)₃] vorgelegt. Anschließend wurde bei einer Umgebungstemperatur von Raumtemperatur die Reaktion zur Erzeugung von Sauerstoff durch Zugabe von jeweils 20 mL einer 9M Kaliumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Ergebnisse sind in den Figuren 11 und 12 und in Tabelle 4 dargestellt.

**Tabelle 4:**

| | | Nach 10 Minuten Reaktionszeit | | |
|---|---|---|---|---|
| **IL** | Flussrateₘₐₓ [L/h] | Reaktionstemperatur [°C] | O₂ Volumen [L] | O₂ Volumen [%] |
| Ohne | 135 | 49 | 2.37 | 95 |
| 5 g IL | 63 | 29 | 1.47 | 58 |
| 10 g IL | 36 | 26 | 0.90 | 35 |

Daraus ist ersichtlich, dass bei pulverförmigem Kaliumsuperoxid die maximale Ausbeute an Gasvolumen von 2,37 L nach 8 Minuten Reaktionszeit erreicht wird. Bei der Paste bestehend aus 10 g Kaliumsuperoxid und 5 g [BMIm][BF(CN)₃] wird nach 10 Minuten Reaktionszeit eine Ausbeute von 1,47 L erreicht. Bei der Paste bestehend aus 10 g Kaliumsuperoxid und 10 g [BMIm][BF(CN)₃] wird nach 10 Minuten Reaktionszeit eine Ausbeute von 0,90 L erreicht. Das in dieser Reaktion theoretisch maximal erzeugbare Gasvolumen beträgt 2,51 L. Das durch die gemessenen Flussraten ermittelte Flusskurvenprofil verläuft bei den Pasten bestehend aus Kaliumsuperoxid und [BMIm][BF(CN)₃] deutlich Plateau-förmiger. Bei den Pasten bestehend aus Kaliumsuperoxid und [BMIm][BF(CN)₃] erfolgt die Sauerstofffreisetzung kontinuierlicher und gleichmäßiger. Die Sauerstofffreisetzung erfolgt kontinuierlicher und gleichmäßiger, je höher das Gesamtgewicht der ionischen Flüssigkeit im Verhältnis zum Gesamtgewicht der Sauerstoffquelle ist. Durch die Verwendung ionischer Flüssigkeiten in unterschiedlicher Konzentration kann die Flussrate des erzeugten Sauerstoffs in weiten Grenzen variiert werden und damit die Reaktionsdauer beliebig im Bereich von wenigen Minuten bis hin zu mehreren Stunden verlängert werden.

### 7. Ausführungsbeispiel:

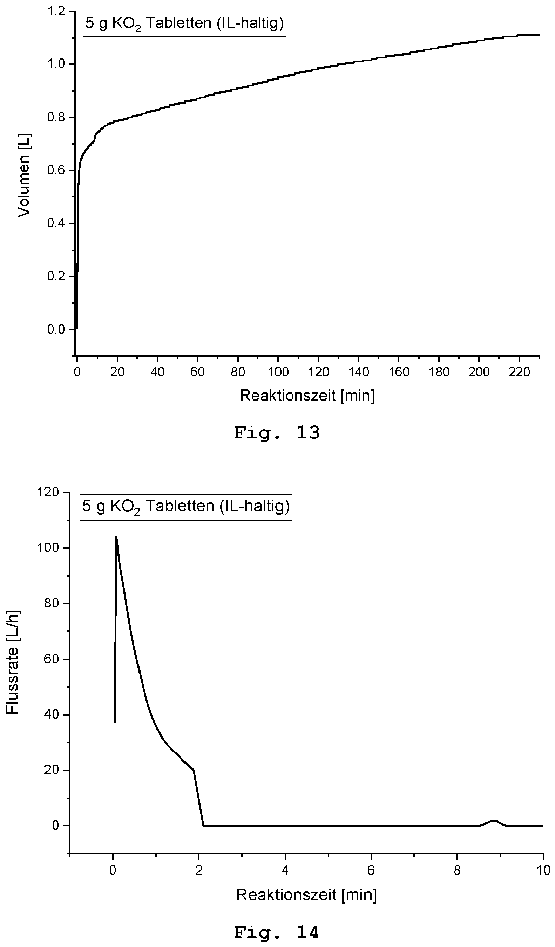

4,55 g Kaliumsuperoxid und 0,45 g [BMPL][BF(CN)₃] wurden zu Tabletten verpresst. 5 g dieser Tabletten wurden in einem zylindrischen Reaktionsgefäß mit einem Innendurchmesser von 28 mm vorgelegt. Anschließend wurde bei einer Umgebungstemperatur von Raumtemperatur die Reaktion zur Erzeugung von Sauerstoff durch Zugabe von 10 mL einer 9M Kaliumhydroxid-Lösung initiiert. Das Reaktionsgefäß wurde verschlossen und der durch die Reaktion zur Erzeugung von Sauerstoff freigesetzte Sauerstoff durch einen Trommelgaszähler zur Messung des Volumens des erzeugten Sauerstoffs aus dem Reaktionsgefäß geleitet. Zusätzlich wurden die Sauerstoffflussrate und die Länge der Reaktionszeit gemessen. Die Reaktion wurde nach 225 Minuten abgebrochen. Die Ergebnisse sind in den Figuren 13 und 14 und in Tabelle 5 dargestellt.

**Tabelle 5:**

| Flussrateₘₐₓ [L/h] | Reaktionstemperatur [°C] | O₂ Volumen [L] | O₂ Volumen [%] | Reaktionsdauer [min] |
|---|---|---|---|---|
| 104 | 27 | 1.11 | 94 | 219 |

Daraus ist ersichtlich, dass bei zu Tabletten verpresstem Kaliumsuperoxid und [BMPL][BF(CN)₃] die Ausbeute an Gasvolumen von 1,11 L nach 219 Minuten Reaktionszeit erreicht wird. Das in dieser Reaktion theoretisch maximal erzeugbare Gasvolumen beträgt 1,14 L. Bei dem durch die gemessenen Flussraten ermittelten Flusskurvenprofil ist ersichtlich, dass unmittelbar nach Zugabe der wässrigen Kaliumhydroxid-Lösung eine maximale Flussrate von 104 L pro Stunde erreicht wird. Nach Erreichen der maximalen Flussrate nimmt die Flussrate kontinuierlich ab.

### 8. Ausführungsbeispiel:

In einem offenen Reaktionsgefäß wurden 2 g pulverförmiges Kaliumsuperoxid und 4 g einer Paste bestehend aus 2 g Kaliumsuperoxid und 2 g [BMPL][BF(CN)₃] vorgelegt. Die Reaktionsgefäße wurden jeweils auf eine Umgebungstemperatur von +70 °C temperiert und für 24 Stunden bei dieser Umgebungstemperatur gehalten. Nach 24 h bei +70 °C Umgebungstemperatur wurde bei beiden Proben kein wägbarer Gewichtsverlust festgestellt.

### 9. Ausführungsbeispiel:

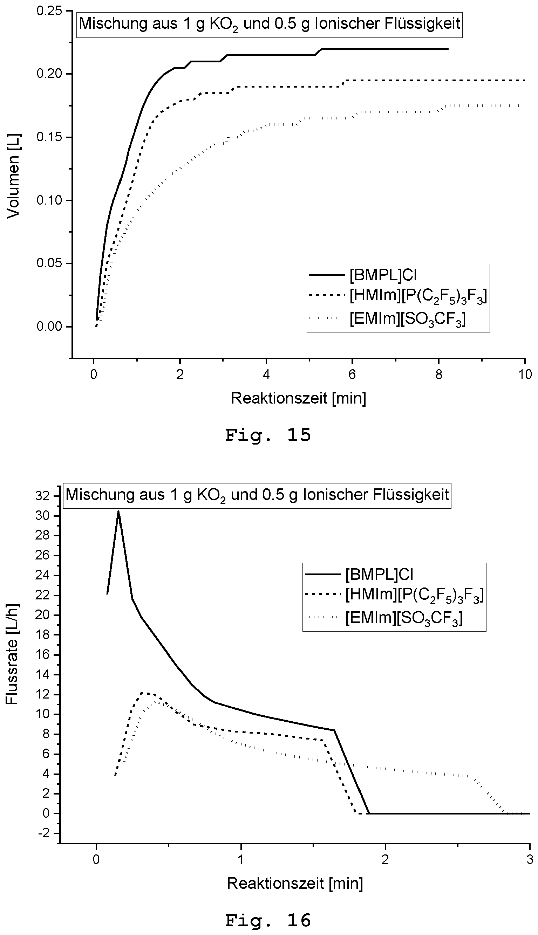

Jeweils 1 g pulverförmiges Kaliumsuperoxid wurde als Sauerstoffquelle in drei zylindrische Reaktionsgefäße mit einem Innendurchmesser von 24 mm vorgelegt. Zugegeben wurden entweder 0,5 g [BMPL]Cl, 0,5 g [HMIm][P(C₂F₅)₃F₃] oder 0,5 g [EMIm][SO₃CF₃], Im Gegensatz zur ionischen Flüssigkeit [BMPL]CI enthalten die ionischen Flüssigkeiten [HMIm][P(C₂F₅)₃F₃] oder [EMIm][SO₃CF₃] hydrophobere Anionen. Anschließend wurde bei einer Umgebungstemperatur von Raumtemperatur die Reaktion zur Erzeugung von Sauerstoff durch Zugabe von jeweils 2 mL einer 9M Kaliumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Reaktionen wurden nach 75 Minuten abgebrochen. Die Ergebnisse sind in den Figuren 15 und 16 und in Tabelle 6 dargestellt.

**Tabelle 6:**

| | | Nach 10 Minuten Reaktionszeit | |
|---|---|---|---|
| Ionische Flüssigkeit | Flussrateₘₐₓ [L/h] | O₂ Volumen [mL] | O₂ Volumen [%] |
| [BMPL]CI | 30 | 220 | 87 |
| [HMIm][P(C₂F₅)₃F₃] | 12 | 195 | 78 |
| [EMIm][SO₃CF₃] | 11 | 175 | 70 |

Daraus ist ersichtlich, dass bei Zugabe von [BMPL]CI die maximale Ausbeute an Gasvolumen von 220 mL nach 5 Minuten Reaktionszeit erreicht wird. Durch Zugabe von [HMIm][P(C₂F₅)₃F₃] wird die maximale Ausbeute an Gasvolumen von 200 mL nach 26 Minuten Reaktionszeit erreicht. Durch Zugabe von [EMIm][SO₃CF₃] wird die maximale Ausbeute an Gasvolumen von 190 mL nach 41 Minuten Reaktionszeit erreicht. Das in dieser Reaktion theoretisch maximal erzeugbare Gasvolumen beträgt 250 mL. Das durch die gemessenen Flussraten ermittelte Flusskurvenprofil verläuft durch Zugabe der ionischen Flüssigkeiten [HMIm][P(C₂F₅)₃F₃] und [EMIm][SO₃CF₃] mit hydrophoben Anionen deutlich Plateau-förmiger. Durch Zugabe einer ionischen Flüssigkeit mit hydrophoben Anionen erfolgt die Sauerstofffreisetzung kontinuierlicher und gleichmäßiger.

### 10. Ausführungsbeispiel:

Jeweils 1 g pulverförmiges Kaliumsuperoxid wurde als Sauerstoffquelle in drei zylindrische Reaktionsgefäße mit einem Innendurchmesser von 24 mm vorgelegt. Zugegeben wurden entweder 0,5 g [BMPL]Cl, 0,5 g [HMIm][P(C₂F₅)₃F₃] oder 0,5 g [EMIm][SO₃CF₃]. Im Gegensatz zur ionischen Flüssigkeit [BMPL]CI enthalten die ionischen Flüssigkeiten [HMIm][P(C₂F₅)₃F₃] oder [EMIm][SO₃CF₃] hydrophobere Anionen. Anschließend wurde bei einer Umgebungstemperatur von -20 °C die Reaktion zur Erzeugung von Sauerstoff durch Zugabe von jeweils 2 mL einer auf eine Umgebungstemperatur von -20 °C temperierten 40%-igen wässrigen Propylenglycol-Mischung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Reaktionen wurden nach 75 Minuten abgebrochen. Das Volumen des erzeugten Sauerstoffs und das durch die gemessenen Flussraten ermittelte Flusskurvenprofil sind dabei ähnlich zu den in dem Ausführungsbeispiel 9 gezeigten Ergebnissen. Auch hier erfolgt durch Zugabe einer ionischen Flüssigkeit mit hydrophoben Anionen die Sauerstofffreisetzung kontinuierlicher und gleichmäßiger.

### 11. Ausführungsbeispiel:

Jeweils 1 g pulverförmiges Kaliumsuperoxid wurde als Sauerstoffquelle in drei zylindrische Reaktionsgefäße mit einem Innendurchmesser von 24 mm vorgelegt. Zugegeben wurden entweder 0,5 g [BMPL]Cl, 0,5 g [HMIm][P(C₂F₅)₃F₃] oder 0,5 g [EMIm][SO₃CF₃]. Im Gegensatz zur ionischen Flüssigkeit [BMPL]CI enthalten die ionischen Flüssigkeiten [HMIm][P(C₂F₅)₃F₃] oder [EMIm][SO₃CF₃] hydrophobere Anionen. Anschließend wurde bei einer Umgebungstemperatur von -20 °C die Reaktion zur Erzeugung von Sauerstoff durch Zugabe von jeweils 2 mL einer auf eine Umgebungstemperatur von -20 °C temperierten 50%-igen wässrigen Ethylenglycol-Mischung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Reaktionen wurden nach 75 Minuten abgebrochen. Das Volumen des erzeugten Sauerstoffs und das durch die gemessenen Flussraten ermittelte Flusskurvenprofil sind dabei ähnlich zu den in dem Ausführungsbeispiel 9 gezeigten Ergebnissen. Auch hier erfolgt durch Zugabe einer ionischen Flüssigkeit mit hydrophoben Anionen die Sauerstofffreisetzung kontinuierlicher und gleichmäßiger.

## Patentansprüche

1. Zusammensetzung zur Erzeugung von Sauerstoff, umfassend die folgenden Bestandteile oder bestehend aus den folgenden Bestandteilen:
- Eine Sauerstoffquelle, wobei die Sauerstoffquelle Kaliumsuperoxid ist,
und
- eine ionische Flüssigkeit, wobei die ionische Flüssigkeit ein aus mindestens einem Kation und höchstens 100 Kationen und mindestens einem Anion und höchstens 100 Anionen bestehendes Salz ist,
wobei die Zusammensetzung zusätzlich eine Wasser enthaltende Lösung oder eine Wasser enthaltende Mischung umfasst, wobei die Wasser enthaltende Lösung eine solche Menge eines weiteren Salzes oder eine solche Menge eines weiteren Salzes zusammen mit einer solchen Menge eines Gefrierschutzmittels oder die Wasser enthaltende Mischung eine solche Menge eines Gefrierschutzmittels enthält, dass der Gefrierpunkt der Lösung oder der Mischung gegenüber dem Gefrierpunkt des Wassers um mindestens 10 °C herabgesetzt ist, wobei das weitere Salz der Wasser enthaltenden Lösung ein Alkalimetallhydroxid, ein Alkalimetallhydroxid-Hydrat, ein Alkalimetallchlorid, ein Alkalimetallchlorid-Hydrat, ein Hydroxid mit einem organischen Kation, ein Hydrat eines Hydroxids mit einem organischen Kation oder ein Gemisch von mindestens zwei ausgewählt aus einem Alkalimetallhydroxid, einem Alkalimetallhydroxid-Hydrat, einem Alkalimetallchlorid, einem Alkalimetallchlorid-Hydrat, einem Hydroxid mit einem organischen Kation und einem Hydrat eines Hydroxids mit einem organischen Kation ist, wobei das Gefrierschutzmittel einen Alkohol umfasst oder aus einem Alkohol besteht.

2. Zusammensetzung nach Anspruch 1, wobei das Kation oder eines der Kationen der ionischen Flüssigkeit ein Ammonium-Ion, ein substituiertes Ammonium-Ion, insbesondere ein Tetraalkylammonium-Ion, ein Phosphonium-Ion, ein substituiertes Phosphonium-Ion, insbesondere ein Tetraalkylphosphonium-Ion, ein N-monosubstituiertes oder ein N-disubstituiertes Pyrrolidinium-Ion, ein N-monosubstituiertes oder ein N',N-disubstituiertes Imidazolium-Ion oder ein N-monosubstituiertes Pyridinium-Ion ist und/oder wobei das Anion oder eines der Anionen ein Halogenid-Ion, ein Tetrafluoroborat-Ion, ein Hexafluorophosphat-Ion, ein Cyanoborat-Ion, ein substituiertes Cyanoborat-Ion, insbesondere ein Perfluoralkylcyanoborat-Ion, ein Sulfonat-Ion, insbesondere ein Perfluoralkylsulfonat-Ion, ein Bisperfluoralkylimid-Ion, ein Borat-Ion, ein substituiertes Borat-Ion, insbesondere ein Perfluoralkylborat-Ion, ein Phosphat-Ion, ein substituiertes Phosphat-Ion, insbesondere ein Perfluoralkylphosphat-lon, oder ein Perfluoralkylfluorophosphat-Ion, ist.

3. Zusammensetzung nach Anspruch 2, wobei ein Substituent des N-monosubstituierten Pyrrolidinium-Ions, des N-monosubstituierten Imidazolium-Ions und des N-monosubstituierten Pyridinium-Ions, und mindestens ein Substituent des N',N-disubstituierten Imidazolium-Ions, und mindestens ein Substituent des N-disubstituierten Pyrrolidinium-Ions unabhängig voneinander aus Alkyl, insbesondere Methyl, Ethyl, Propyl oder Butyl, Benzyl und Aryl ausgewählt ist.

4. Zusammensetzung nach einem der vorhergehenden Ansprüche, wobei die ionische Flüssigkeit eine ionische Flüssigkeit ist, die in einem Temperaturbereich von -60 °C bis +150 °C, insbesondere in einem Temperaturbereich von -40 °C bis +110 °C, flüssig ist.

5. Zusammensetzung nach einem der vorhergehenden Ansprüche, wobei das Gefrierschutzmittel einen einwertigen Alkohol, insbesondere Ethanol oder Octanol, einen zweiwertigen Alkohol, insbesondere Propylenglycol oder Ethylenglycol, einen dreiwertigen Alkohol, insbesondere Glycerol, oder ein Gemisch von mindestens zwei ausgewählt aus einem einwertigen Alkohol, insbesondere Ethanol oder Octanol, einem zweiwertigen Alkohol, insbesondere Propylenglycol oder Ethylenglycol, und einem dreiwertigen Alkohol, insbesondere Glycerol, umfasst oder jeweils daraus besteht.

6. Zusammensetzung nach einem der vorhergehenden Patentansprüche, wobei das Alkalimetallhydroxid Kaliumhydroxid oder Natriumhydroxid ist, wobei das Alkalimetallhydroxid-Hydrat ein Hydrat von Kaliumhydroxid oder ein Hydrat von Natriumhydroxid ist, wobei das Alkalimetallchlorid Natriumchlorid ist, wobei das Alkalimetallchlorid-Hydrat ein Hydrat von Lithiumchlorid ist, wobei das Hydroxid mit einem organischen Kation ein Tetraalkylammonium-Hydroxid, insbesondere ein Tetrabutylammonium-Hydroxid, ist, wobei das Hydrat eines Hydroxids mit einem organischen Kation ein Hydrat eines Tetraalkylammonium-Hydroxids, insbesondere ein Hydrat von Tetrabutylammonium-Hydroxid, ist.

7. Zusammensetzung nach einem der vorhergehenden Ansprüche, wobei das Gesamtgewicht des weiteren Salzes oder das Gesamtgewicht des weiteren Salzes zusammen mit dem Gesamtgewicht des Gefrierschutzmittels in der Wasser enthaltenden Lösung im Verhältnis zum Gesamtgewicht der Wasser enthaltenden Lösung oder wobei das Gesamtgewicht des Gefrierschutzmittels in der Wasser enthaltenden Mischung im Verhältnis zum Gesamtgewicht der Wasser enthaltenden Mischung mindestens 25 Gew.-%, insbesondere mindestens 30 Gew.-%, insbesondere mindestens 35 Gew.-%, insbesondere mindestens 40 Gew.-%, beträgt.

8. Zusammensetzung nach einem der vorhergehenden Ansprüche, wobei die Zusammensetzung als weiteren Bestandteil mindestens ein Additiv umfasst, wobei das Additiv unabhängig voneinander aus Natriumdihydrogenphosphat oder Kaliumhydroxid, einem Zuschlagstoff und einem Antischaummittel ausgewählt ist.

9. Zusammensetzung nach Anspruch 8, wobei der Zuschlagstoff ein Schichtsilikat, insbesondere Glimmer, oder pyrogene Kieselsäure ist.

10. Zusammensetzung nach Anspruch 8 oder 9, wobei das Antischaummittel, Octanol, Paraffinwachs oder ein Polysiloxan umfasst oder daraus besteht.

11. Sauerstoffgenerator mit einem ersten und einem zweiten Kompartiment, mit einer Öffnung zur Freisetzung oder Leitung zur Ableitung von im Sauerstoffgenerator entstehendem Sauerstoff und mit sämtlichen Bestandteilen der Zusammensetzung nach Patentanspruch 1 und optional mindestens einem Bestandteil oder mindestens einem weiteren Bestandteil der Zusammensetzung nach einem der Patentansprüche 2 bis 10, wobei die Sauerstoffquelle und die ionische Flüssigkeit in dem ersten Kompartiment und die Wasser enthaltende Lösung oder die Wasser enthaltende Mischung in dem zweiten Kompartiment enthalten sind, wobei optional das Additiv, der Zuschlagstoff oder das Antischaummittel nach einem der Ansprüche 8 bis 10 entweder in dem ersten Kompartiment oder in dem zweiten Kompartiment enthalten ist, wobei der Sauerstoffgenerator eine das erste Kompartiment vom zweiten Kompartiment separierende physikalische Barriere und ein Mittel zur Überwindung der physikalischen Barriere umfasst, wobei die physikalische Barriere so angeordnet ist, dass die Sauerstoffquelle, die ionische Flüssigkeit und die Wasser enthaltende Lösung oder die Wasser enthaltende Mischung nach Überwindung der physikalischen Barriere miteinander in Kontakt kommen, wobei die Öffnung oder Leitung so angeordnet ist, dass dadurch entstehender Sauerstoff durch die Öffnung oder durch die Leitung austritt.

12. Sauerstoffgenerator nach Anspruch 11, wobei der Sauerstoffgenerator zusätzlich mindestens ein Verzögerungsmittel umfasst, wobei das Verzögerungsmittel so angeordnet ist, dass eine Gesamtmenge der im Sauerstoffgenerator vorhandenen Wasser enthaltenden Lösung oder eine Gesamtmenge der im Sauerstoffgenerator vorhandenen Wasser enthaltenden Mischung nach Überwindung der physikalischen Barriere erst nach und nach mit einer Gesamtmenge der im Sauerstoffgenerator vorhandenen Sauerstoffquelle in Kontakt kommt.

13. Verfahren zur Erzeugung von Sauerstoff, wobei die Sauerstoffquelle, die ionische Flüssigkeit und die Wasser enthaltende Lösung oder die Wasser enthaltende Mischung der Zusammensetzung nach einem der Ansprüche 1 bis 7 und optional das Additiv, der Zuschlagstoff oder das Antischaummittel nach einem der Ansprüche 8 bis 10 bereitgestellt und miteinander in Kontakt gebracht werden.

14. Verfahren nach Anspruch 13, wobei das miteinander Inkontaktbringen bei einer Temperatur in einem Bereich von -70 °C bis +110 °C, insbesondere in einem Bereich von -40 °C bis -20 °C erfolgt.

15. Verwendung der Sauerstoffquelle, der ionischen Flüssigkeit und der Wasser enthaltenden Lösung oder der Wasser enthaltenden Mischung der Zusammensetzung nach einem der Ansprüche 1 bis 7 und optional des Additivs, des Zuschlagstoffs oder des Antischaummittels nach einem der Ansprüche 8 bis 10 zur Erzeugung von Sauerstoff.
